# EUROPEAN PATENT APPLICATION

(11) **EP 4 800 466 A1**
(43) Date of publication of application: **02.09.2026**
(21) Application number: 26156194.8
(22) Date of filing: 04.02.2026
(51) Int. Cl.: G02F 1/1333, G02F 1/13357

(54) **DISPLAY DEVICE**

(30) Priority: 26.02.2025 KR 20250024921
(71) Applicant: LG Electronics Inc., Yeongdeungpo-gu Seoul 07336 (KR)
(72) Inventor: KO, Junho, Seoul (KR)
(74) Representative: Schornack, Oliver

(57) **Abstract**

Disclosed is a display device. The display device of the present disclosure includes: a display panel; a frame which is positioned behind the display panel; a substrate which is positioned between the display panel and the frame; a light source which is mounted on a front surface of the substrate; and a fixer which couples the substrate to the frame, wherein the fixer comprises a leg that penetrates the substrate and the frame, and is caught on a rear surface of the frame.

## Description

### CROSS-REFERENCE TO RELATED APPLICATION

This application claims the priority benefit of Korean Patent Application No. 10-2025-0024921, filed on February 26, 2025, the disclosures of which is incorporated herein by reference.

### BACKGROUND OF THE INVENTION

### Field of the invention

The present disclosure relates to a display device.

### Description of the Related Art

As information society develops, the demand for display devices is also increasing in various forms. In response to this, various display devices such as Liquid Crystal Display Device (LCD), Plasma Display Panel (PDP), Electro luminescent Display (ELD), Vacuum Fluorescent Display (VFD) have been researched and used in recent years.

Among these, a liquid crystal panel includes a TFT substrate and a color filter substrate that are opposite to each other with a liquid crystal layer interposed therebetween, and may display an image by using light provided from a backlight unit.

The substrate of the existing backlight unit (i.e., the LED substrate) was attached to the frame by using double-sided tape. However, in order to attach the substrate to the frame by using double-sided tape, there was the inconvenience of having to remove a release paper from the double-sided tape, and there was a problem of increased process costs. In addition, there was a concern that the substrate attached to the frame using double-sided tape would be damaged in the process of separating the substrate from the frame. In addition, there was a problem that the adhesive strength of the double-sided tape is decreased in a high-temperature environment, thereby causing the substrate to fall off from the frame.

### SUMMARY OF THE INVENTION

It is an objective of the present disclosure to solve the above and other problems.

Another object of the present disclosure may be to provide a fixer that couples a substrate to a frame.

Another object of the present disclosure may be to provide a member including a fixer and a supporter of a diffusion plate.

Another object of the present disclosure may be to provide a structure that can minimize lifting of a bridge connecting a fixer and a supporter.

Another object of the present disclosure may be to provide various examples of a member including a fixer, a bridge, and a supporter.

In accordance with an aspect of the present disclosure, a display device may include: a display panel; a frame positioned behind the display panel; a substrate disposed between the display panel and the frame; a light source mounted on a front surface of the substrate; and a fixer coupling the substrate to the frame, in which the fixer may include a leg penetrating the substrate and the frame, and coupled to a rear surface of the frame.

In accordance with another aspect of the present disclosure, a display device may include: a display panel; a frame positioned behind the display panel; a first substrate which is disposed between the display panel and the frame, and on which a first light source mounted; a second substrate which is spaced from the first substrate, and on which a second light source mounted; and a fixer coupling the first substrate to the frame, in which the fixer may include a leg penetrating the first substrate and the frame, and coupled to a rear surface of the frame.

In accordance with another aspect of the present disclosure, a display device may include: a display panel; a frame positioned behind the display panel; a substrate disposed between the display panel and the frame; a light source mounted on a front surface of the substrate; a reflective sheet reflecting light from the light source, the reflective sheet disposed between the frame and the substrate or covering the front surface of the substrate; and a fixer coupling the substrate to the frame, in which the fixer may include a leg penetrating the substrate and the frame, and coupled to a rear surface of the frame.

### BRIEF DESCRIPTION OF THE DRAWINGS

The above and other objects, features and advantages of the present invention will be more apparent from the following detailed description in conjunction with the accompanying drawings, in which:

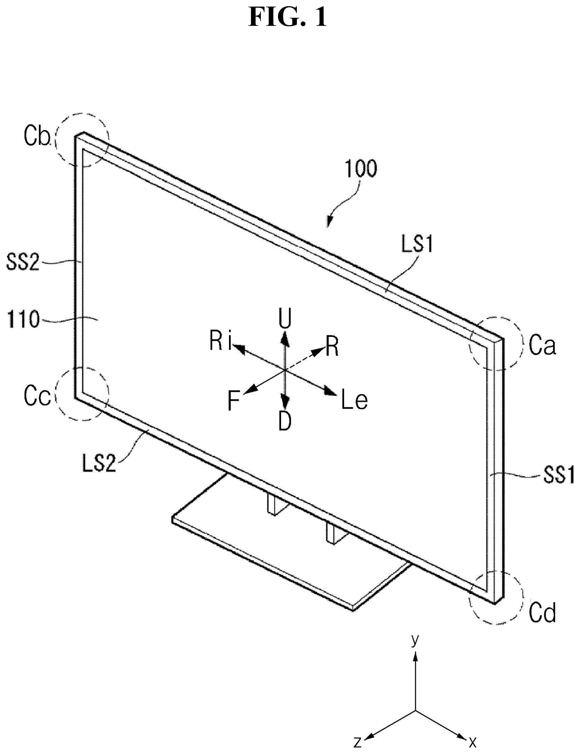

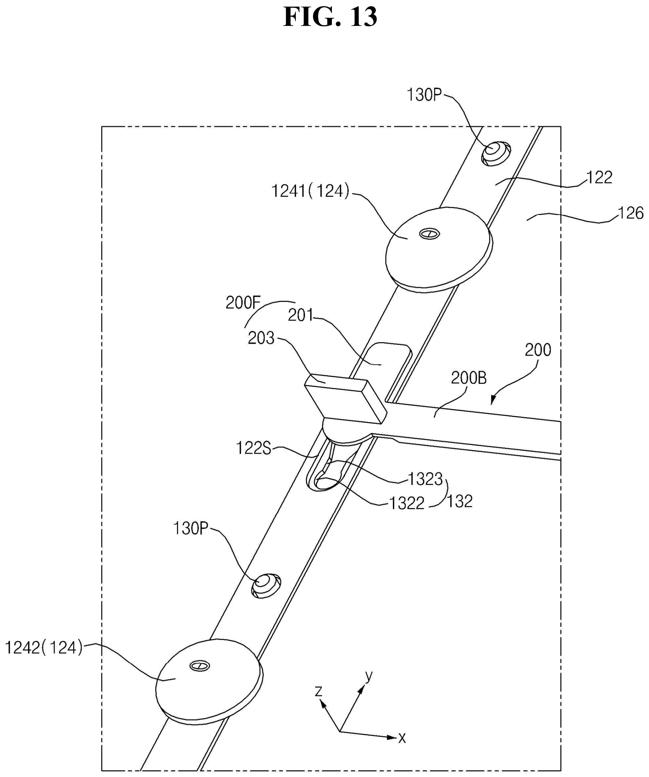

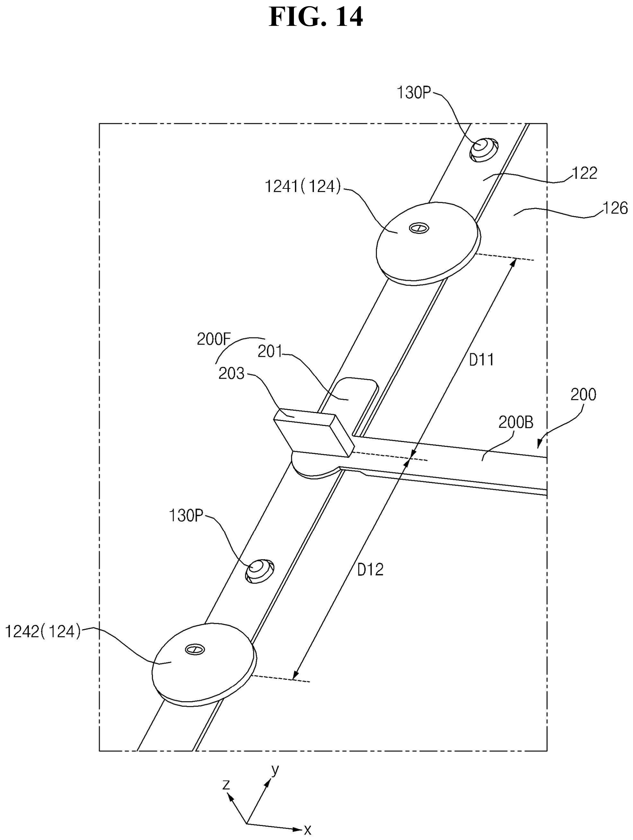

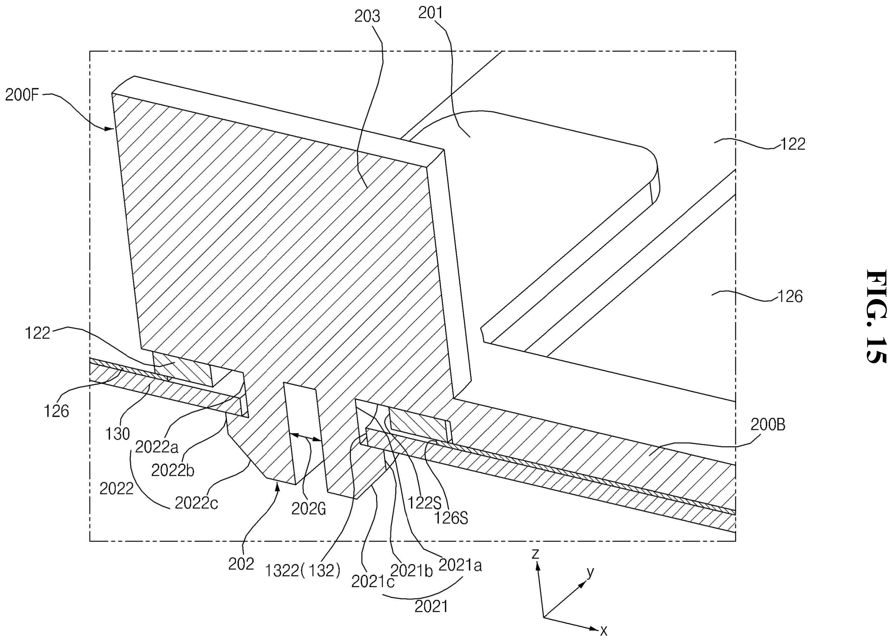

FIGS. 1 to 29 are diagrams illustrating examples of a display device according to embodiments of the present disclosure.

### DETAILED DESCRIPTION

Description will now be given in detail according to exemplary embodiments disclosed herein, with reference to the accompanying drawings. For the sake of brief description with reference to the drawings, the same or equivalent components may be denoted by the same reference numbers, and description thereof will not be repeated.

In general, suffixes such as "module" and "unit" may be used to refer to elements or components. Use of such suffixes herein is merely intended to facilitate description of the specification, and the suffixes do not have any special meaning or function.

In the present disclosure, that which is well known to one of ordinary skill in the relevant art has generally been omitted for the sake of brevity. The accompanying drawings are used to assist in easy understanding of various technical features and it should be understood that the embodiments presented herein are not limited by the accompanying drawings. As such, the present disclosure should be construed to extend to any alterations, equivalents and substitutes in addition to those which are particularly set out in the accompanying drawings.

It will be understood that although the terms first, second, etc. may be used herein to describe various elements, these elements should not be limited by these terms. These terms are only used to distinguish one element from another.

It will be understood that when an element is referred to as being "connected with" another element, there may be intervening elements present. In contrast, it will be understood that when an element is referred to as being "directly connected with" another element, there are no intervening elements present.

A singular representation may include a plural representation unless context clearly indicates otherwise.

In the present application, it should be understood that the terms "comprises, includes," "has," etc. specify the presence of features, numbers, steps, operations, elements, components, or combinations thereof described in the specification, but do not preclude the presence or addition of one or more other features, numbers, steps, operations, elements, components, or combinations thereof.

Direction indications of up (U), down (D), left (Le), right (Ri), front (F), and rear (R) shown in the drawings are only for convenience of explanation, and the technical concept disclosed in this specification is not limited thereto.

Referring to FIG. 1, a display device 100 may include a display panel 10. The display panel 10 may display an image.

The display device 100 may include a first long side LS1, a second long side LS2 opposite to the first long side LS1, a first short side SS1 adjacent to the first and second long sides LS1 and LS2, and a second short side SS2 opposite to the first short side SS1. Meanwhile, for convenience of description, it is illustrated that the length of the first and second long sides LS1 and LS2 are longer than the length of the first and second short sides SS1 and SS2, but it may also be possible that the length of the first and second long sides LS1 and LS2 are substantially equal to the length of the first and second short sides SS1 and SS2.

The direction parallel to the long sides LS1 and LS2 of the display device 100 may be referred to as a left-right direction. The direction parallel to the short sides SS1 and SS2 of the display device 100 may be referred to as an up-down direction. The direction perpendicular to the long sides LS1 and LS2 and the short sides SS1 and SS2 of the display device 100 may be referred to as a forward/rearward direction.

The direction in which the display panel 110 displays an image may be referred to as a front (F, z), and the opposite direction may be referred to as a rear R. The first long side LS1 may be referred to as an upper side (U, y), and the second long side LS2 may be referred to as a lower side D. The first short side SS1 side may be referred to as a left side (Le, x), and the second short side SS2 side may be referred to as a right side Ri.

The first long side LS1, the second long side LS2, the first short side SS1, and the second short side SS2 may be referred to as an edge of the display device 100. The point where the first long side LS1, the second long side LS2, the first short side SS1, and the second short side SS2 meet each other may be referred to as a corner.

The point where the first short side SS1 and the first long side LS1 meet may be referred to as a first corner Ca. The point where the first long side LS1 and the second short side SS2 meet may be referred to as a second corner Cb. The point where the second short side SS2 and the second long side LS2 meet may be referred to as a third corner Cc. The point where the second long side LS2 and the first short side SS1 meet may be referred to as a fourth corner Cd.

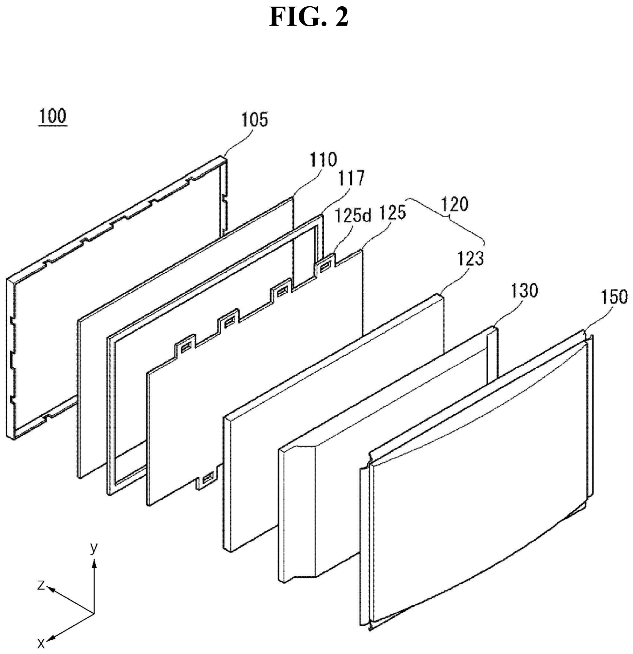

Referring to FIG. 2, the display device 100 may include a display panel 110, a front cover 105, a guide panel 117, a backlight unit 120, a frame 130, and a back cover 150.

The display panel 110 may form a front surface of the display device 100, and display an image. The display panel 110 may display an image by having a plurality of pixels that output Red, Green, or Blue (RGB) for each pixel in accordance with a timing. The display panel 110 may be divided into an active area where an image is displayed and a de-active area where an image is not displayed. The display panel 110 may include a front substrate and a rear substrate that are opposite to each other with a liquid crystal layer interposed there-between. The display panel 110 may be referred to as an LCD panel 110.

The front substrate may include a plurality of pixels consisting of red, green, and blue sub-pixel. The front substrate may output light corresponding to the color of red, green, or blue according to a control signal.

The rear substrate may include switching elements. The rear substrate may switch a pixel electrode. For example, the pixel electrode may change the molecular arrangement of liquid crystal layer according to an externally input control signal. The liquid crystal layer may include liquid crystal molecules. The arrangement of liquid crystal molecules may change in response to a voltage difference generated between a pixel electrode and a common electrode. The liquid crystal layer may transmit or block light provided from the backlight unit to the front substrate.

The front cover 105 may cover at least a portion of the front and side surfaces of the display panel 110. The front cover 105 may be divided into a front cover positioned on the front surface of the display panel 110 and a side cover positioned on the side surface. At least one of the front cover and the side cover may be omitted.

The guide panel 117 may surround the perimeter of the display panel 110 and cover the side surface of the display panel 110. The guide panel 117 may be coupled to the display panel 110 or may support the display panel 110. The guide panel 117 may be referred to as a middle cabinet 117 or a side frame 117.

The backlight unit 120 may be positioned on the rear of the display panel 110. The backlight unit 120 may include light sources. The backlight unit 120 may be coupled to the frame 130 in front of the frame 130. The backlight unit 120 may be driven in a full driving manner or a partial driving manner such as local dimming or impulsive. The backlight unit 120 may include an optical sheet 125 and an optical layer 123.

The optical sheet 125 may evenly transmit light from a light source to the display panel 110. The optical sheet 125 may be composed of a plurality of layers. For example, the optical sheet 125 may include a prism sheet or a diffusion sheet. For example, the optical sheet 125 may be a double brightness enhancement film (DBEF). Meanwhile, a coupling portion 125d of the optical sheet 125 may be coupled to the front cover 105, the frame 130, or the back cover 150.

The frame 130 may be positioned at the rear of the backlight unit 120, and may support the components of the display device 100. For example, a component, such as the backlight unit 120, a Printed Circuit Board (PCB) on which a plurality of electronic devices are positioned, may be coupled to the frame 130. The frame 130 may be referred to as a cover bottom 130.

The back cover 150 may cover the rear of the frame 130. The back cover 150 may be coupled to the frame 130 and/or the front cover 105. The back cover 150 may be omitted, and in this case, the frame 130 may form the rear surface of the display device 100.

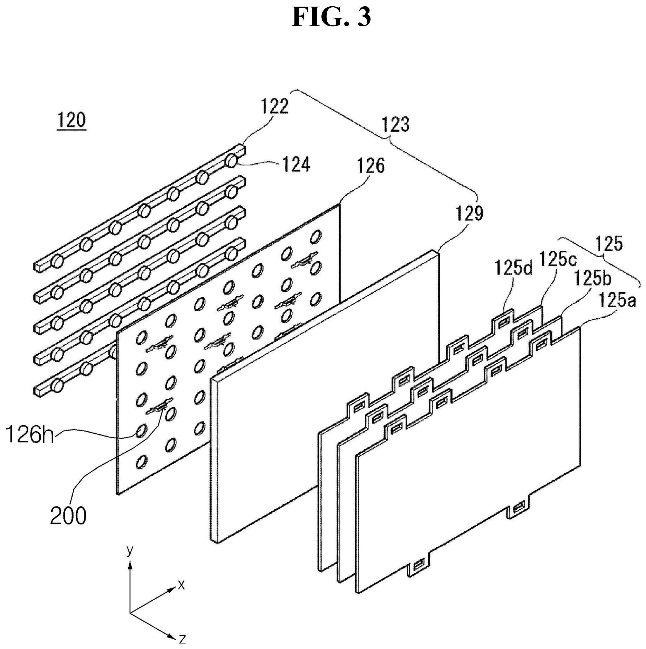

Referring to FIG. 3, the backlight unit 120 may include an optical layer 123 and an optical sheet 125. The optical layer 123 may include a substrate 122, at least one optical assembly 124, a reflective sheet 126, and a diffusion plate 129.

The substrate 122 may be coupled to the front surface of the frame 130. The substrate 122 may be composed of a plurality of bars spaced apart from each other. The substrate 122 may be composed of at least one of polyethylene terephthalate (PET), glass, polycarbonate (PC), and silicon. The substrate 122 may be a printed circuit board (PCB).

At least one optical assembly 124 may be mounted on the substrate 122. The plurality of optical assemblies 124 may be spaced apart from each other on the substrate 122. An electrode pattern for connecting an adapter and the optical assembly 124 may be formed on the substrate 122. For example, a carbon nanotube electrode pattern for connecting the optical assembly 124 and the adapter may be formed on the substrate 122.

For example, the optical assembly 124 may be a light emitting diode (LED) chip or a light emitting diode package including at least one light emitting diode chip. The light source of the optical assembly 124 may be a colored LED emitting at least one color such as red, green, and blue, or may be composed of a white LED. The colored LED may include at least one of a red LED, a green LED, and a blue LED. The substrate 122 may be referred to as an LED substrate 122. The substrate 122 and the optical assemblies 124 may be collectively referred to as an LED array 122.

The reflective sheet 126 may be positioned in front of the substrate 122. The reflective sheet 126 may have a hole 126h in which the light assembly 124 is positioned. The reflective sheet 126 may include at least one of a metal or a metal oxide which is a reflective material. For example, the reflective sheet 126 may include a metal having a high reflectivity, such as at least one of aluminum Al, silver Ag, gold Au, and titanium dioxide TiO2, and/or a metal oxide. The reflective sheet 126 may reflect light from the light assembly 124 or light reflected from the diffusion plate 129 in a forward direction.

The diffusion plate 129 may be positioned in front of the reflective sheet 126. The diffusion plate 129 may diffuse light from the light assembly 124. A supporter 200S may be positioned between the reflective sheet 126 and the diffusion plate 129, and may support the rear surface of the diffusion plate 129. An air gap may be formed between the reflective sheet 126 and the diffusion plate 129, and the light of the optical assembly 124 may be widely spread by the air gap. The diffusion plate 129 may be referred to as an optical plate 129.

The optical sheet 125 may be positioned in front of the diffusion plate 129. The rear surface of the optical sheet 125 may be in close contact with the diffusion plate 129, and the front surface of the optical sheet 125 may be in close contact with or adjacent to the rear surface of the display panel 10. The optical sheet 125 may include at least one sheet.

For example, the optical sheet 125 may include a plurality of sheets having different functions. A first optical sheet 125a may be a diffusion plate sheet, and the second optical sheet 125b and the third optical sheet 125c may be a prism sheet. The prism sheet may collect light from the diffusion plate 129 and provide it to the display panel 110. The diffusion sheet may prevent light from the diffusion plate 129 from being partially concentrated, thereby making the light distribution more uniform. The number and/or positions of the prism sheet and the diffusion sheet may be changed.

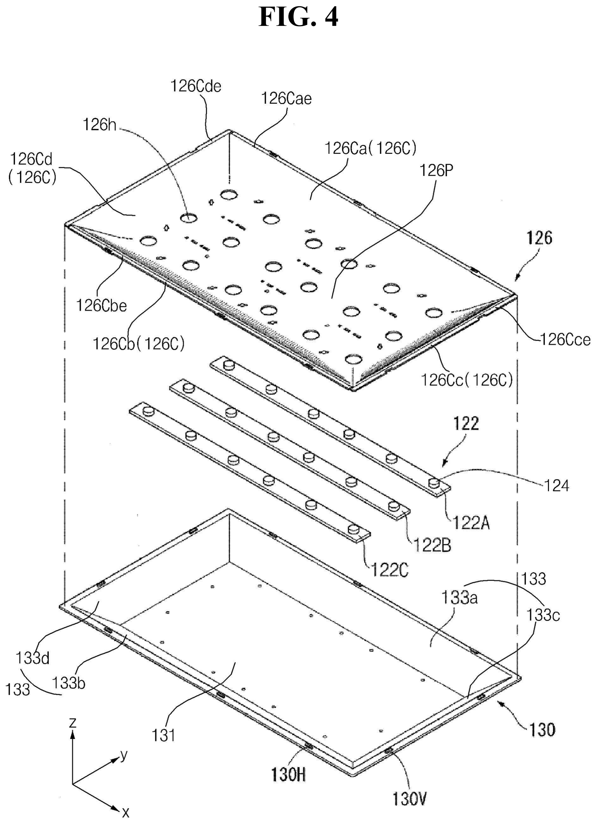

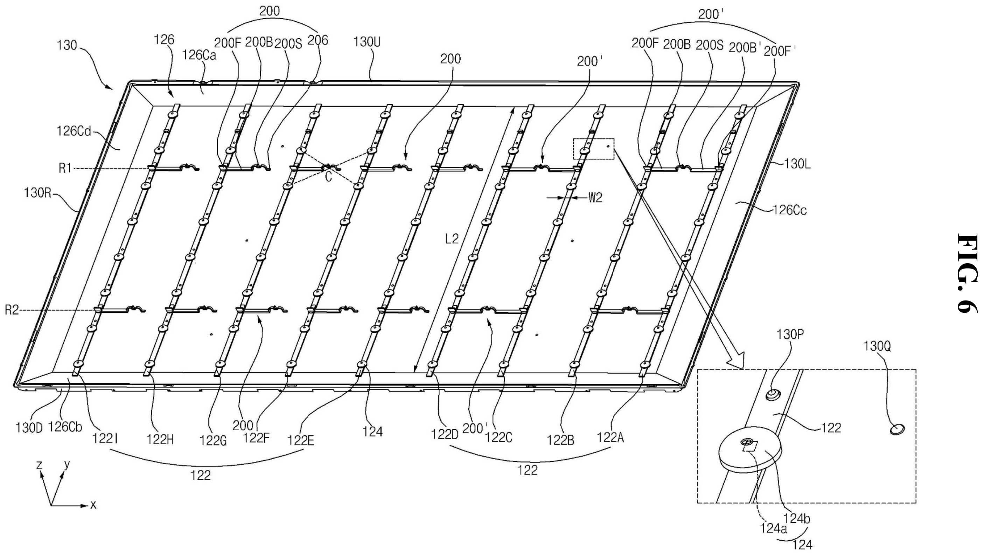

Referring to FIG. 4, the substrate 122 may be elongated and have a bar shape. For example, a plurality of substrates 122A, 122B, and 122C may be extended in a horizontal direction (i.e., left-right direction), and spaced apart from each other in a vertical direction (i.e., up-down direction). For another example, the plurality of substrates 122A, 122B, 122C, 122D, 122E, 122F, 122G, 122H, 122I (see FIG. 6) may extend in a vertical direction (i.e., up-down direction), and may be spaced apart from each other in a horizontal direction (i.e., left-right direction).

The frame 130 may have an overall shape of a square tray. The frame 130 may include a central portion 131, a side portion 133, and a seating portion 130H, 130V.

The central portion 131 may be a square plate, and the substrate 122 may be positioned on the front surface of the central portion 131. The central portion 131 may be referred to as a base 131.

The side portion 133 may extend obliquely in a forward direction from an edge of the central portion 131. The side portion 133 may be referred to as a chamfer portion 133. A first side portion 133a may extend obliquely in a forward direction from an upper side of the central portion 131. The angle between the first side portion 133a and the front surface of the central portion 131 may be an obtuse angle. A second side portion 133b may extend obliquely in a forward direction from a lower side of the central portion 131. The angle between the second side portion 133b and the front surface of the central portion 131 may be an obtuse angle. A third side portion 133c may extend obliquely in a forward direction from a left side of the central portion 131. The angle between the third side portion 133c and the front surface of the central portion 131 may be an obtuse angle. A fourth side portion 133d may extend obliquely in a forward direction from the right side of the central portion 131. The angle between the fourth side portion 133d and the front surface of the central portion 131 may be an obtuse angle. The first to fourth side portions 133a, 133b, 133c, 133d may be connected to each other.

The seating portion 130H, 130V may extend from the distal end of the side portion 133 in a direction parallel to the central portion 131. The vertical portion 130V may extend in a vertical direction (i.e., in an up-down direction), and may form the left and right sides of the frame 130. The horizontal portion 130H may extend in a horizontal direction (i.e., in a left-right direction), and may form the upper and lower sides of the frame 130.

The reflective sheet 126 may cover the substrate 122, and the optical assemblies 124 on the substrate 122 may be positioned in the holes 126h of the reflective sheet 126. The reflective sheet 126 may have a shape corresponding to the frame 130. The reflective sheet 126 may include a central portion 126P and a side portion 126C.

The central portion 126P may have a rectangular sheet shape, and the side portion 126C may be bent in a forward direction from an edge of the central portion 126P. The central portion 126P may have a shape corresponding to the central portion 131, and the substrate 122 may be covered by the central portion 126P. The central portion 126P may be referred to as a base 126P, and the side portion 126C may be referred to as a chamfer portion 126C.

A first side portion 126Ca may be bent in a forward direction from the upper side of the central portion 126P. The first side portion 126Ca may face the first side portion 133a. A portion 126Cae of the first side portion 126Ca may be bent so as to be positioned on the horizontal portion 130H extended from the first side portion 133a.

A second side portion 126Cb may be bent in a forward direction from the lower side of the central portion 126P. The second side portion 126Cb may face the second side portion 133b. A portion 126Cbe of the second side portion 126Cb may be bent so as to be positioned on the horizontal portion 130H extended from the second side portion 133b.

A third side portion 126Cc may be bent so as to be inclined forward from the left side of the central portion 126P. The third side portion 126Cc may face the third side portion 133c. A portion 126Cce of the third side portion 126Cc may be bent so as to be positioned on the vertical portion 130V extended from the third side portion 133c.

A fourth side portion 126Cd may be bent so as to be inclined forward from the right side of the central portion 126P. The fourth side portion 126Cd may face the fourth side portion 133d. A portion 126Cde of the fourth side portion 126Cd may be bent to be positioned on the vertical portion 130V extended from the fourth side portion 133d.

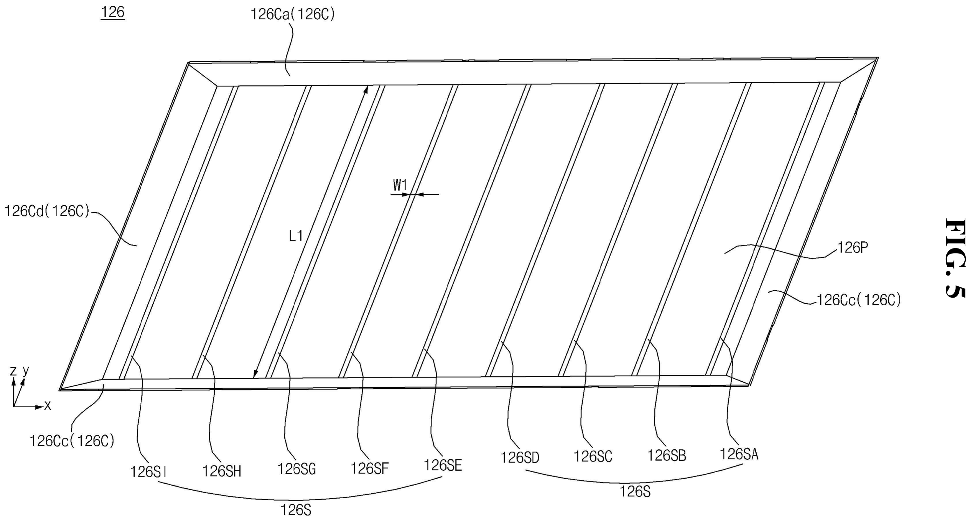

Referring to FIGS. 5 and 6, the reflective sheet 126 may be positioned on the frame 130, and the substrate 122 may be positioned on the reflective sheet 126. When the reflective sheet 126 is disposed between the frame 130 and the substrate 122 (see FIGS. 5 and 6), the substrate 122 may not be covered by the reflective sheet 126, and the reflective sheet 126 may not have a hole in which the optical assembly 124 on the substrate 122 is positioned. Alternatively, when the substrate 122 is disposed between the frame 130 and the reflective sheet 126 (see FIGS. 3 and 4), the substrate 122 may be covered by the reflective sheet 126, and the reflective sheet 126 may have a hole 126h (see FIGS. 3 and 4) in which the optical assembly 124 on the substrate 122 is positioned.

The reflective sheet 126 on the frame 130 may include a slit 126S. The slit 126S may be referred to as a slot 126S or a hole 126S. The slit 126S may be formed in the central portion 126P of the reflective sheet 126. The slit 126S may be formed long. The slit 126S may be formed long vertically or horizontally. One end of the slit 126S may be adjacent to the first side portion 126Ca or the third side portion 126Cc. The other end of the slit 126S may be adjacent to the second side portion 126Cb or the fourth side portion 126Cd. A plurality of slits 126S may be spaced apart from each other in a direction intersecting with the length direction of the slit 126S. For example, the distance between the plurality of slits 126SA, 126SB, 126SC, 126SD, 126SE, 126SF, 126SG, 126SH, 126SI may be constant.

A guide pin 130Q may protrude from the front surface of the frame 130 and may be inserted into a hole (no reference numeral) of the reflective sheet 126. The guide pin 130Q may guide the position of the reflective sheet 126.

The substrate 122 may be positioned on the reflective sheet 126. The substrate 122 may be positioned to correspond to the slit 126S. The substrate 122 may cover the slit 126S. The substrate 122 may be extended along the slit 126S. The length direction of the substrate 122 may be parallel to the short sides (i.e., the left side 130L and the right side 130R of the frame 130) of the frame 130, or may be parallel to the long sides (i.e., the upper side 130U and the lower side 130D of the frame 130) of the frame 130. The length L2 of the substrate 122 may be equal to or similar to the length L1 of the slit 126S. The width W2 of the substrate 122 may be larger than the width W1 of the slit 126S. Each of the plurality of substrates 122 may cover each of the plurality of slits 126S. For example, the distance between the plurality of substrates 122A, 122B, 122C, 122D, 122E, 122F, 122G, 122H, 1221 may be constant.

The optical assembly 124 may be positioned on the substrate 122. The optical assemblies 124 on each substrate 122 may be arranged along the length direction of the substrate 122. For example, the distance between the optical assemblies 124 on each substrate 122 may be constant. The plurality of optical assemblies 124 on the plurality of substrates 122 may be aligned with each other in a direction intersecting with the substrates 122. Alternatively, the plurality of optical assemblies 124 on the plurality of substrates 122 may be arranged to be intercrossed in a direction intersecting with the substrates 122. The optical assembly 124 may include a light source 124a that provides light and a lens 124b that covers the light source 124a. The lens 124b may be omitted.

The light source 124a may be mounted on the front surface of the substrate 122. The light source 124a may be a light emitting diode (LED) chip or a light emitting diode package having at least one light emitting diode chip. The light source 124a may be a colored LED that emits at least one color among colors such as red, green, and blue, or may be a white LED.

The lens 124b may cover the light source 124a, and may be coupled onto the front surface of the substrate 122. The lens 124b may have a dome or hemispherical shape. The width of the lens 124b may be equal to, greater than, or smaller than the width of the substrate 122.

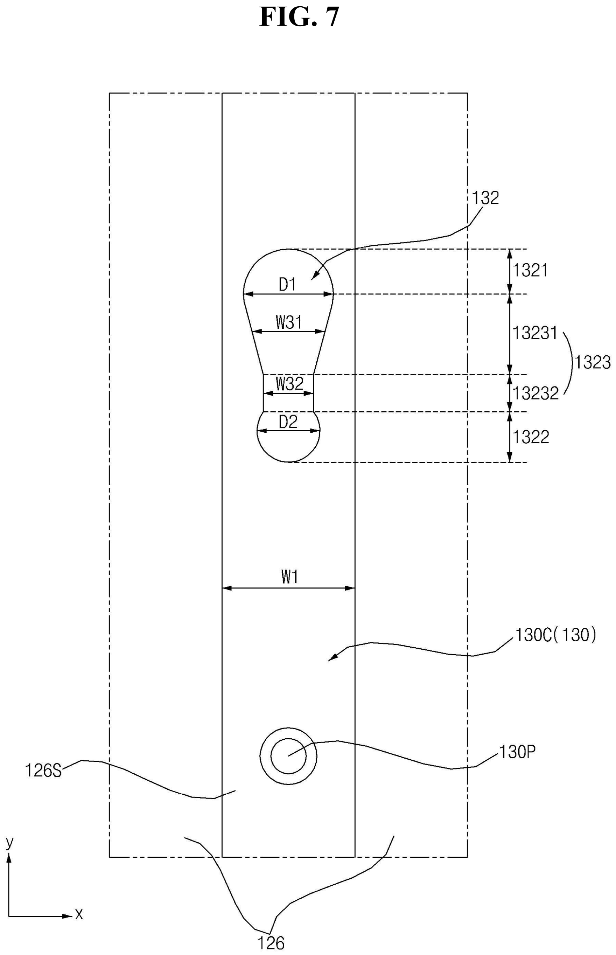

Referring to FIG. 7, a portion 130C of the frame 130 may be exposed through a slit 126S of the reflective sheet 126. The portion 130C of the frame 130 may be referred to as a coupling portion 130C. A coupling hole 132 may be formed in the coupling portion 130C. The coupling hole 132 may have an overall shape of a bowling pin or a baseball bat. The coupling hole 132 may include a first hole 1321, a second hole 1322, and a third hole 1323.

The first hole 1321 may have a shape of a semicircle or an arc larger or smaller than a semicircle.

The second hole 1322 may have a shape of a major arc. That is, the second hole 1322 may have a shape of an arc larger than a semicircle. The diameter D2 of the second hole 1322 may be smaller than the diameter D1 of the first hole 1321. The open portion of the first hole 1321 may face the open portion of the second hole 1322.

The third hole 1323 may connect the first hole 1321 and the second hole 1322. The width of the third hole 1323 may become smaller as it approaches the second hole 1322 from the first hole 1321. A first section 13231 of the third hole 1323 may be connected to the first hole 1321, and the width W31 of the first section 13231 may become smaller as it gets farther away from the first hole 1321. A second section 13232 of the third hole 1323 may be connected to the first section 13231 and the second hole 1322, and the width W32 of the second section 13232 may be constant. The width W32 may be smaller than the diameter D2 of the second hole 1322.

A guide pin 130P may protrude from the front surface of the coupling portion 130C. The guide pin 130P may be spaced apart from the coupling hole 132.

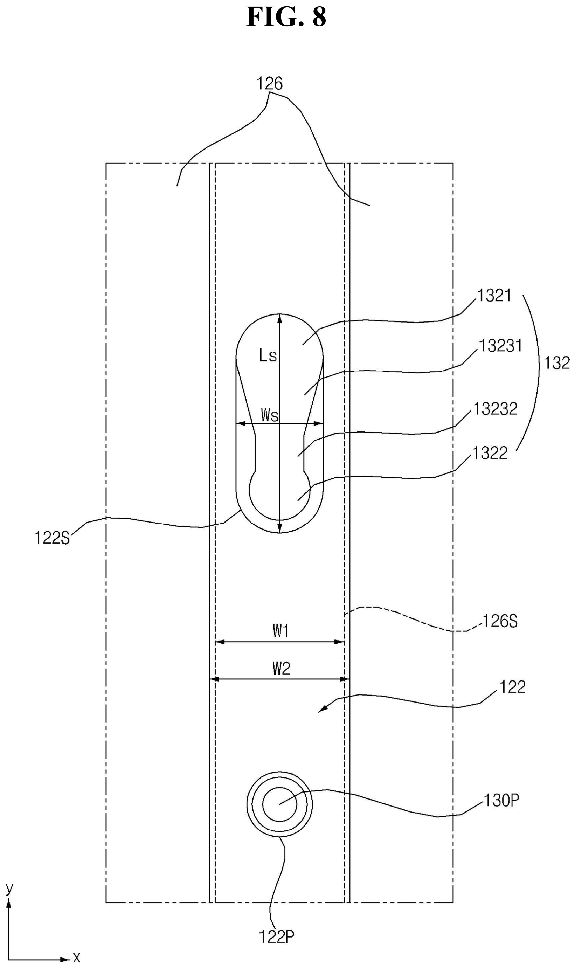

Referring to FIG. 8, the substrate 122 may cover the slit 126S, and may be positioned on the reflective sheet 126. The width W2 of the substrate 122 may be larger than the width W1 of the slit 126S. The substrate 122 may press the reflective sheet 126 toward the frame 130. The pin 130P of the coupling portion 130C may be inserted into the guide hole 122P formed in the substrate 122. The guide pin 130P may guide the position of the substrate 122.

A through hole 122S may be formed in the substrate 122 and may be positioned to correspond to the coupling hole 132. The through hole 122S may be a hole larger than the coupling hole 132. The length Ls of the through hole 122S may be equal to or longer than the length of the coupling hole 132. The width Ws of the through hole 122S may be equal to or larger than the maximum width of the coupling hole 132.

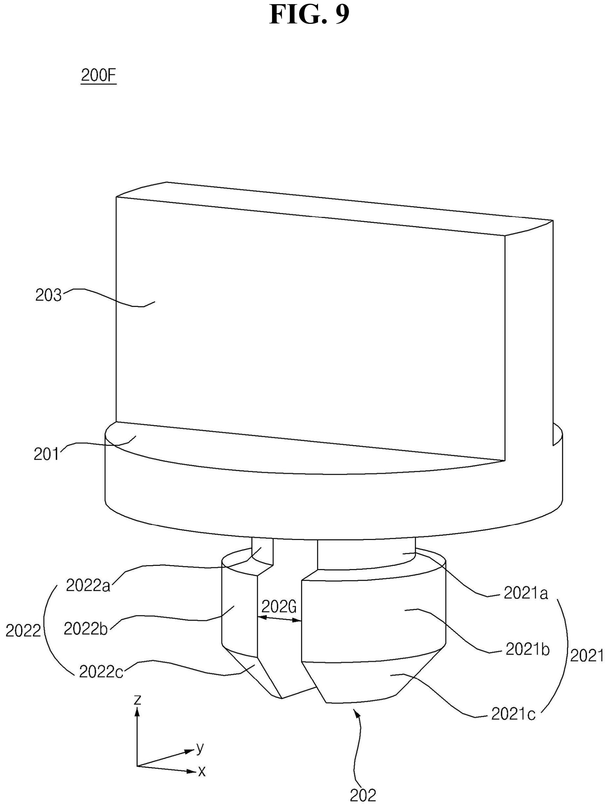

Referring to FIG. 9, a fixer 200F may include a body 201 and a leg 202.

The body 201 may be flat as a whole. The body 201 may have a disc shape. Alternatively, at least a portion of the body 201 may have an angular shape.

The leg 202 may protrude from the rear surface of the body 201. A gap 202G may be formed in the leg 202. A first leg 2021 and a second leg 2022 may protrude from the rear surface of the body 201. The gap 202G may be formed between the first leg 2021 and the second leg 2022. The first leg 2021 and the second leg 2022 may be spaced apart from each other in the width direction (see the width W2 of FIG. 8) of the substrate 122. The leg 202 may have elasticity. The leg 202 may be referred to as a spring pin 202. When the first leg 2021 and the second leg 2022 are compressed by an external force, the gap 202G may become smaller. When the external force is released, the first leg 2021 and the second leg 2022 may return to their original states, and the gap 202G may also return to its original state.

The first leg 2021 may include a first part 2021a, a second part 2021b, and a third part 2021c. The first part 2021a may have a half cylinder shape. The second part 2021b may have a half cylinder shape, and the radius of the second part 2021b may be larger than the radius of the first part 2021a. The third part 2021c may have a half truncated cone shape. The radius of the third part 2021c may decrease as it gets farther away from the second part 2021b.

The second leg 2022 may include a first part 2022a, a second part 2022b, and a third part 2022c. The first part 2022a may have a half cylinder shape. The second part 2022b may have a half cylinder shape, and the radius of the second part 2022b may be larger than the radius of the first part 2022a. The third part 2022c may have a half truncated cone shape. The radius of the third part 2022c may become smaller as it gets farther away from the second part 2022b.

For example, the first leg 2021 and the second leg 2022 may have shapes that are symmetrical to each other.

A handle 203 may protrude from the front surface of the body 201. The handle 203 may be referred to as a protrusion 203. The handle 203 may have a square block or other shape.

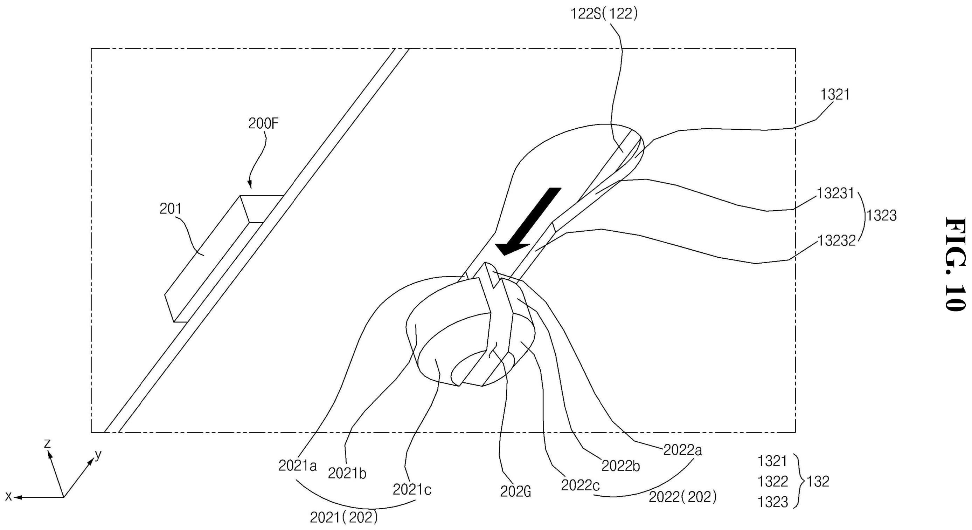

Referring to FIGS. 9 and 10, the outer surfaces of the second parts 2021b and 2022b of the leg 202 of the fixer 200F may form a maximum width of the leg 202. The diameter D1 (see FIG. 7) of the first hole 1321 of the coupling hole 132 and the width Ws of the through hole 122S may be larger than the maximum width of the leg 202. Alternatively, the diameter D1 and/or the width Ws may be smaller than the maximum width of the leg 202. In this case, the third parts 2021c, 2022c of the leg 202 may touch the boundary of the through hole 122S and/or the first hole 1321, and the leg 202 may be elastically deformed by being inserted into the through hole 122S and the first hole 1321. The leg 202 of the fixer 200F that has penetrated the through hole 122S and the first hole 1321 may be restored. The body 201 of the fixer 200F may be positioned on the front surface of the substrate 122, and the first parts 2021a, 2022a of the leg 202 may be positioned in the through hole 122S and the first hole 1321.

The distance between the outer surfaces of the first parts 2021a and 2022a may be greater than the widths W31 and W32 of the third hole 1323. That is, when the position of the fixer 200F is moved from the first hole 1321 to the third hole 1323, the first parts 2021a and 2022a may be compressed by the portion of the coupling portion 130C forming the boundary of the third hole 1323, and the gap 202G of the leg 202 may be narrowed. Next, when the position of the fixer 200F is moved from the third hole 1323 to the second hole 1322, the first parts 2021a and 2022a may be restored because the diameter D2 (see FIG. 7) of the second hole 1322 is larger than the width W32 of the third hole 1323. The first parts 2021a, 2022a positioned in the second hole 1322 may be in their original state, or may be in a slightly compressed state.

Accordingly, the fixer 200F may be sequentially positioned in the first hole 1321, the third hole 1323, and the second hole 1322 of the coupling hole 132 while sliding on the substrate 122 (see the arrow in FIG. 10). The body 201 of the fixer 200F positioned in the second hole 1322 may be positioned on the front surface of the substrate 122, and the second parts 2021b, 2022b of the leg 202 may be caught on the rear surface of the coupling portion 130C of the frame 130. That is, the fixer 200F may couple the substrate 122 to the frame 130. For example, a user may move the fixer 200F in a first direction while holding the handle 203 of the fixer 200F to couple the fixer 200F to the frame 130, or move the fixer 200F in a second direction opposite to the first direction to separate the fixer 200F from the frame 130.

In comparison, when the substrate 122 is coupled to the frame 130 by using a double-sided tape, the coupling work of the substrate 122 is relatively difficult, and the adhesive strength of the double-sided tape is weakened over time or with temperature changes, so that the substrate 122 is relatively easily detached from the frame 130. That is, when the substrate 122 is coupled to the frame 130 by using the fixer 200F, the coupling work of the substrate 122 is relatively easy, and there is less concern that the substrate 122 will be detached from the frame 130. In addition, when the fixer 200F is used, the material cost of the double-sided tape may be reduced, and there is an advantage that it is easier to implement automation than the double-sided tape.

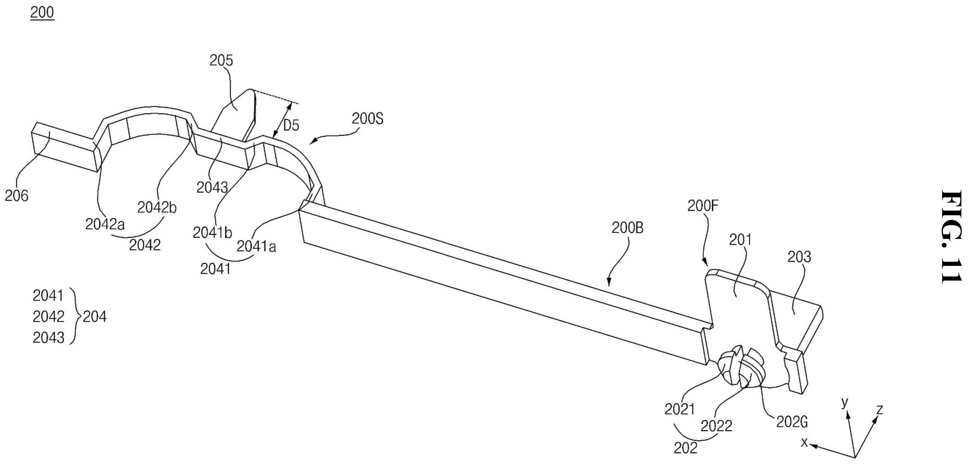

Referring to FIG. 11, a fixing member 200 may include a fixer 200F, a bridge 200B, and a supporter 200S. The fixing member 200 may include a plastic material. The fixing member 200 may be referred to as a supporting member 200 or a member 200. The fixer 200F may be referred to as a first part 200F of the fixing member 200, the supporter 200S may be referred to as a second part 200S of the fixing member 200, and the bridge 200B may be referred to as a third part 200B of the fixing member 200. The fixer 200F, the bridge 200B, and the supporter 200S may be formed as one body.

The bridge 200B may extend from the body 201 of the fixer 200F. The length direction of the bridge 200B may intersect with the length direction of the substrate 122 (see FIG. 6). One end of the bridge 200B may be connected to the lateral side of the body 201.

The supporter 200S may have elasticity. The supporter 200S may be formed at the other end of the bridge 200B. One end of the supporter 200S may be formed at the bridge 200B while being adjacent to the other end of the bridge 200B. A portion between the one end and the other end of the supporter 200S may be bent at least once. The supporter 200S may include a curved part 204 and a protruding part 205.

The curved part 204 may have at least one curved shape. The curved part 204 may be formed to be convex in a forward direction. The curved part 204 may include a first part 2041, a second part 2042, and a third part 2043.

The first part 2041 may be formed to be convex in a forward direction. The first part 2041 may form one end of the curved part 204. One end 2041a of the first part 2041 may be connected to the bridge 200B. The other end 2041b of the first part 2041 may be positioned forward of one end 2041a of the first part 2041.

The second part 2042 may be formed to be convex in a forward direction. The second part 2042 may form the other end of the curved part 204. One end 2042a of the second part 2042 may be opposite to one end 2041a of the first part 2041. The other end 2042b of the second part 2042 may be positioned forward of one end 2042a of the second part 2042.

The third part 2043 may be positioned between the first part 2041 and the second part 2042. The third part 2043 may form steps that are lowered in a rearward direction from the first part 2041 and the second part 2042. The third part 2043 may be flat. For example, the first part 2041 and the second part 2042 may be symmetrical with respect to the center of the third part 2043.

The protruding part 205 may protrude in a forward direction from the third part 2043. The protruding part 205 may be positioned at the center of the third part 2043. The protruding part 205 may be referred to as a head 205, a pin 205, or a tower 205. The protruding part 205 may form a front end of the supporter 200S, and may be positioned forward by a certain distance D5 from the front ends of the first and second parts 2041 and 2042.

A support part 206 may extend from one end 2042a of the second part 2042. The support part 206 may be opposite to the bridge 200B with respect to the supporter 204S. The support part 206 may be extended in a direction parallel to the bridge 200B. Meanwhile, when the support part 206 is considered as a component of the bridge 200B, one section of the bridge 200B may be disconnected, and both ends of the supporter 200S forming an open-loop may connect the disconnected section of the bridge 200B.

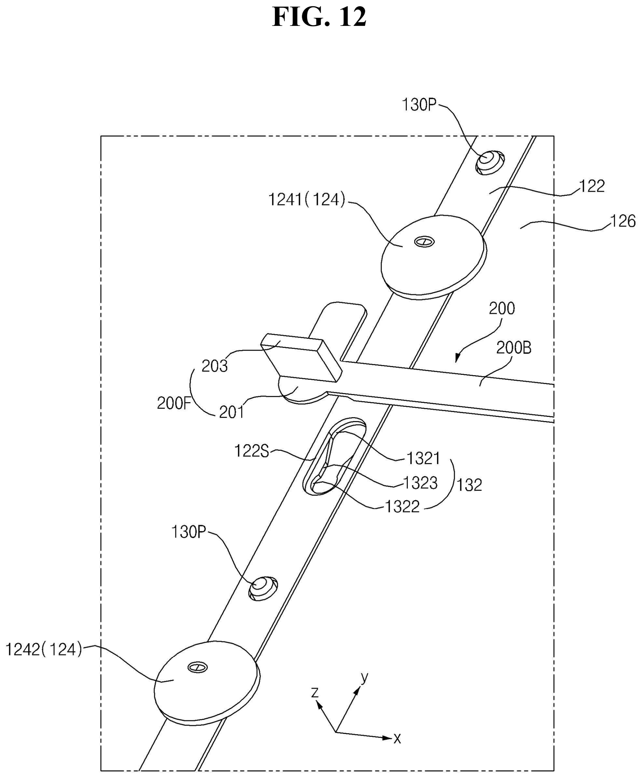

Referring to FIGS. 12 to 15, the fixer 200F of the fixing member 200 may be sequentially positioned in the first hole 1321, the third hole 1323, and the second hole 1322 of the coupling hole 132 of the frame 130 while sliding on the substrate 122, as described above with reference to FIGS. 9 and 10. The body 201 of the fixer 200F positioned in the second hole 1322 may be positioned on the front surface of the substrate 122, and the second parts 2021b, 2022b of the leg 202 may be caught on the rear surface of the frame 130. The body 201 of the fixer 200F may press the substrate 122 positioned on the reflective sheet 126 toward the frame 130.

The bridge 200B of the fixing member 200 may extend to the side of the substrate 122, and may be adjacent to the front surface of the reflective sheet 126. The bridge 200B may be positioned on the front surface of the reflective sheet 126. Since the body 201 comes in contact with the front surface of the substrate 122, the lifting of the cantilever-shaped bridge 200B may be suppressed to some extent.

The length direction of the fixing member 200 may intersect with the length direction of the substrate 122. The length direction of the fixing member 200 may be the direction in which the bridge 200B of the fixing member 200 extends. When the substrate 122 extends in a vertical direction, the fixing member 200 may extend in a horizontal direction. When the substrate 122 extends in a horizontal direction, the fixing member 200 may extend in a vertical direction. That is, the fixing member 200 may be arranged in a cantilever shape with respect to the substrate 122.

The fixing member 200 may be arranged between the optical assemblies 124 on the substrate 122. For example, the distance D11 between the first optical assembly 1241 and the fixing member 200 may be equal to the distance D12 between the second optical assembly 1242 and the fixing member 200. The height of the handle 203 of the fixing member 200 may be equal to or higher than the height of the optical assembly 124. The front end of the handle 203 may be positioned forward of the front end of the optical assembly 124.

Meanwhile, the handle 203 of FIGS. 12 to 15 may extend transversely. Alternatively, the handle 203 may extend longitudinally. Alternatively, the handle 203 may have a shape of a cylinder or other shape.

Alternatively, the handle 203 may have a shape of the supporter 200S (see FIG. 11), and in this case, the handle 203 may be referred to as a supporter 203. In the forward/rearward direction, the front end of the supporter 203 may be positioned at the same level (height) as the front end of the supporter 200S. The supporter 203 may be extended transversely like the supporter 200S of FIG. 11. Alternatively, the supporter 203 may extend longitudinally. One end of the transversely extended supporter 203 may be formed on the body 201, and the other end of the supporter 203 may be formed on the bridge 200B. Alternatively, both ends of the transversely extended supporter 203 may be formed on the body 201. At this time, the body 201 may have a width larger than the width of the substrate 122. Both ends of the longitudinally extended supporter 203 may be formed on the body 201. The fixing member 200 may be provided with at least one of the supporter 203 and the supporter 200S. The number and arrangement of the supporters 200S, 203 supporting the diffusion plate 129 (see FIG. 3) may be variably set in consideration of the size of the diffusion plate 129 and the installation environment.

Alternatively, the handle 203 may be omitted.

The fixer 200F may cover the through hole 122S of the substrate 122 and the coupling hole 132 of the frame 130, and may be opaque. Accordingly, the through hole 122S and the coupling hole 132 may not be visible from the front of the fixer 200F. The fixer 200F may have the same color as the reflective sheet 126. For example, the fixer 200F and the reflective sheet 126 may have white color. The reflective material may be coated on the fixer 200F, or may constitute the fixer 200F.

The bridge 200B, the supporter 200S (see FIG. 11), and the support part 206 (see FIG. 11) may be positioned in front of the reflective sheet 126, and may be transparent or opaque. At least one of the bridge 200B, the supporter 200S, and the support part 206 may have the same color as the reflective sheet 126. For example, at least one of the bridge 200B, the supporter 200S, and the support part 206 and the reflective sheet 126 may be white. The reflective material may be coated on at least one of the bridge 200B, the supporter 200S, and the support part 206, or may constitute at least one of the bridge 200B, the supporter 200S, and the support part 206.

Referring again to FIG. 6, each substrate 122 may be elongated, and at least one fixing member 200 may be coupled to each substrate 122. For example, two or more fixing members 200 may be coupled to each substrate 122. The fixing members 200 may be aligned with each other in a direction intersecting with the substrate 122. Each of the fixing members 200 of a first row R1 may be coupled to each of the substrates 122. Each of the fixing members 200 of a second row R2 may be coupled to each of the substrates 122. Alternatively, the fixing members 200 may be arranged to be intercrossed in a direction intersecting with the substrates 122.

The fixing member 200 may be arranged between two substrates 122. For example, four optical assemblies 124 on the two substrates 122 may be arranged at the corners of a square. For example, the supporter 200S of the fixing member 200 may be arranged at the center C of the square. Accordingly, the difference in brightness of light between the area where the supporter 200S is arranged and the other area may be minimized.

The fixing member 200 arranged between two adjacent substrates 122 may be coupled to one of the two substrates 122. Alternatively, a fixing member 200' may be coupled to both of the two substrates 122. Alternatively, a fixing member (not shown) may be coupled to all of three or more substrates 122.

For example, the fixing member 200 of first type may be coupled to one substrate 122. The fixing member 200 of first type may be arranged between a fourth substrate 122D and a fifth substrate 122E, and may be coupled to the fifth substrate 122E. The fixing member 200 of first type may be arranged between the fifth substrate 122E and a sixth substrate 122F, and may be coupled to the sixth substrate 122F. The fixing member 200 of first type may be arranged between the sixth substrate 122F and a seventh substrate 122G, and may be coupled to the seventh substrate 122G. The fixing member 200 of first type may be arranged between the seventh substrate 122G and an eighth substrate 122H, and may be coupled to the eighth substrate 122H. The fixing member 200 of first type may be arranged between the eighth substrate 122H and a ninth substrate 1221, and may be coupled to the ninth substrate 122I.

For example, a fixing member 200' of second type may be coupled to two substrates 122. The fixer 200F of the fixing member 200' of second type may be coupled to one of the two substrates 122, and the bridge 200B may connect the supporter 200S between the fixer 200F and the substrates 122. In addition, the fixing member 200' of second type may include a fixer 200F' coupled to the other of the two substrates 122, and a bridge 200B' connecting the fixer 200F' and the supporter 200S. The support part 206 (see FIG. 11) may be a part of the bridge 200B', and the bridge 200B' and the fixer 200F' may be respectively symmetrical with the bridge 200B and the fixer 200F with respect to the supporter 200S. The fixing member 200' of second type may be arranged between the first substrate 122A and the second substrate 122B, and may be coupled to the first substrate 122A and the second substrate 122B. The fixing member 200' of second type may be arranged between the third substrate 122C and the fourth substrate 122D, and may be coupled to the third substrate 122C and the fourth substrate 122D.

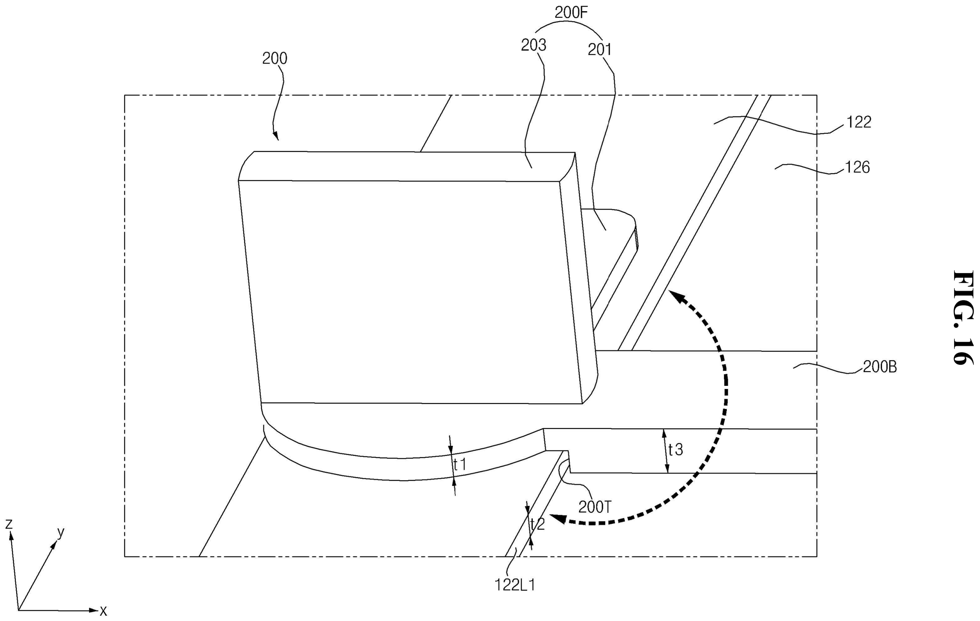

Referring to FIG. 16, the body 201 of the fixing member 200 may be positioned on the front surface of the substrate 122, and the bridge 200B of the fixing member 200 may be positioned on the side of the substrate 122. The bridge 200B may be connected to the body 201. The bridge 200B may be thicker than the body 201, and may be arranged closer to the front surface of the reflective sheet 126 than the body 201. The thickness t3 of the bridge 200B may be larger than the thickness t1 of the body 201. The thickness t3 of the bridge 200B may be equal to or less than the sum of the thickness t1 of the body 201 and the thickness t2 of the substrate 122.

A stepped portion 200T between the rear surface of the bridge 200B and the rear surface of the substrate 122 may face a first lateral side 122L1 of the substrate 122. The first lateral side 122L1 of the substrate 122 may be a first long side of the substrate 122. The stepped portion 200T may be in contact with the first lateral side 122L1 of the substrate 122, or may be positioned away from it. Accordingly, the rotation of the fixing member 200 around a forward/rearward direction axis (i.e., the z-axis) may be minimized, as the stepped portion 200T comes in contact with the first lateral side 122L1 of the substrate 122 (see the dotted arrow in both direction in FIG. 16).

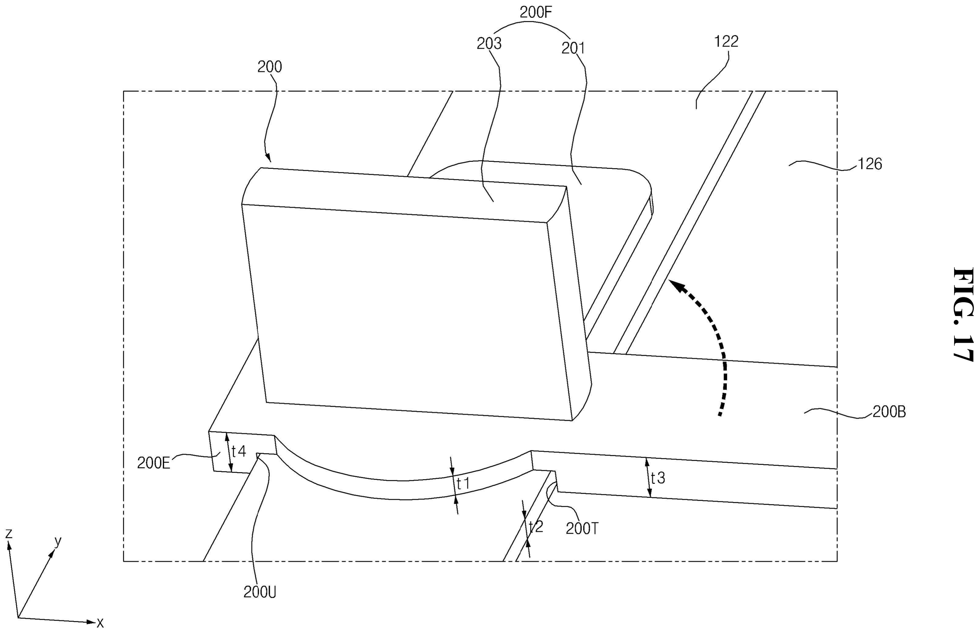

Referring to FIG. 17, an engaging portion 200E may be formed on the body 201 of the fixing member 200, and may be positioned opposite to the bridge 200B with respect to the body 201. The engaging portion 200E may protrude from the body 201 toward the front surface of the reflective sheet 126. The thickness t4 of the engaging portion 200E may be larger than the thickness t1 of the body 201. The thickness t4 of the engaging portion 200E may be equal to or less than the sum of the thickness t1 of the body 201 and the thickness t2 of the substrate 122.

A stepped portion 200U between the rear surface of the engaging portion 200E and the rear surface of the substrate 122 may face a second lateral side 122L2 of the substrate 122. The second lateral side 122L2 of the substrate 122 may be a second long side of the substrate 122. The stepped portion 200U may be in contact with the second lateral side 122L2 of the substrate 122 or may be positioned away from it.

Accordingly, the lifting of the cantilever-shaped bridge 200B may be minimized, as the stepped portion 200U comes in contact with the second lateral side 122L2 of the substrate 122. Here, the lifting of the bridge 200B may mean that the bridge 200B is lifted away from the reflective sheet 126 by the rotation of the bridge 200B around an up-down direction axis (i.e., the y-axis) (see the dotted arrow in FIG. 17).

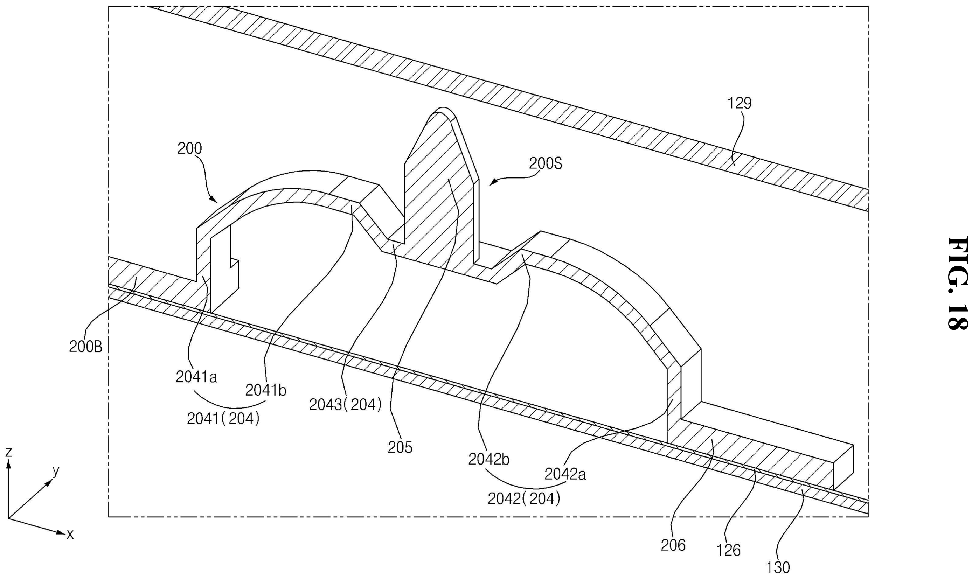

Referring to FIG. 18, the bridge 200B and the support part 206 of the fixing member 200 may be adjacent to the front surface of the reflective sheet 126. The bridge 200B and the support part 206 may be positioned on the front surface of the reflective sheet 126.

The supporter 200S may connect the bridge 200B and the support part 206, and may be curved. One end 2041a of the supporter 200S may be connected to the bridge 200B. The other end 2041b of the supporter 200S may be connected to the support part 206. The portion of the supporter 200S between both ends 2041a, 2041b may be formed to be convex in a forward direction.

The diffusion plate 129 may cover the substrates 122 on which the optical assemblies 124 are mounted and the reflective sheet 126 (see FIGS. 3 and 6). The light of the optical assemblies 124 may pass through the diffusion plate 129 and be provided to the display panel 110 (see FIG. 2). The diffusion plate 129 may be deformed. For example, during transport or storage of the display device (particularly, stored lying down), deformation of the diffuser 129 may occur. For example, in response to the operation of the display device, the temperature of the diffusion plate 129 may increase, and deformation of the diffusion plate 129 may occur. For example, the deformation of the diffusion plate 129 may be sagging toward the reflective sheet 126.

The protruding part 205 may form the front end of the supporter 200S, and may be adjacent to the rear surface of the diffusion plate 129. The protruding part 205 may contact the rear surface of the diffusion plate 129 to support the diffusion plate 129. As the diffusion plate 129 sags, the curved part 204 of the supporter 200S may be pressed toward the reflective sheet 126 by the diffusion plate 129. At this time, the impact due to the contact between the supporter 200S and the diffusion plate 129 may be alleviated by the elasticity of the supporter 200S. The elastically deformed supporter 200S may be restored to its original shape as the diffusion plate 129 returns to its original state.

Accordingly, the supporter 200S may support the diffusion plate 129 while minimizing damage to the diffusion plate 129. The supporter 200S may be a component of a fixing member 200 (see FIGS. 12 to 15) that couples the substrate 122 to the frame 130. In other words, a separate process for coupling the supporter 200S to the frame 130 is unnecessary, and a hole in the frame 130 for coupling the supporter 200S is unnecessary. In comparison, if a hole in the frame 130 is required for coupling the supporter 200S, light may leak out through the hole, or a means for preventing this may be required.

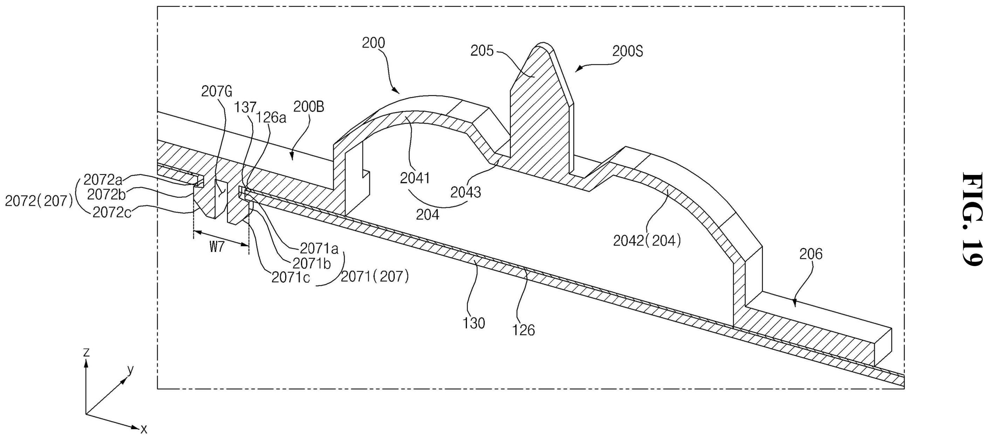

Referring to FIG. 19, the fixing member 200 may further include a fixing portion 207. The fixing portion 207 may be referred to as an auxiliary leg 207. The fixing portion 207 may protrude from the rear surface of the bridge 200B. The fixing portion 207 may be adjacent to the supporter 200S. A gap 207G may be formed in the fixing portion 207. A first fixing portion 2071 and a second fixing portion 2072 may protrude from the rear surface of the bridge 200B. The gap 207G may be formed between the first fixing portion 2071 and the second fixing portion 2072. The first fixing portion 2071 and the second fixing portion 2072 may be spaced apart from each other in the length direction of the fixing member 200. The fixing portion 207 may have elasticity. When the first fixing portion 2071 and the second fixing portion 2072 are compressed by an external force, the gap 207G may become smaller. When the external force is released, the first fixing portion 2071 and the second fixing portion 2072 may return to their original states, and the gap 207G may also return to its original state.

The first fixing portion 2071 may include a first part 2071a, a second part 2071b, and a third part 2071c. The first part 2071a may have a half cylinder shape. The second part 2071b may have a half cylinder shape, and the radius of the second part 2071b may be larger than the radius of the first part 2071a. The third part 2071c may have a half truncated cone shape. The radius of the third part 2071c may decrease as it gets farther away from the second part 2071b.

The second fixing part 2072 may include a first part 2072a, a second part 2072b, and a third part 2072c. The first part 2072a may have a half cylinder shape. The second part 2072b may have a half cylinder shape, and the radius of the second part 2072b may be larger than the radius of the first part 2072a. The third part 2072c may have a half truncated cone shape. The radius of the third part 2072c may become smaller as it gets farther away from the second part 2072b.

For example, the first fixing portion 2071 and the second fixing portion 2072 may have shapes that are symmetrical to each other. The shape of the fixing portion 207 may be the same as the shape of the leg 202 of the fixer 200F described above with reference to FIGS. 9 and 11.

A fixing hole 137 may be formed in the frame 130, and may be positioned to correspond to the fixing portion 207. The fixing portion 207 may penetrate a through hole 126a of the reflective sheet 126 and the fixing hole 137. The outer surfaces of the second parts 2071b, 2072b of the fixing portion 207 may form the maximum width W7 of the fixing portion 207. The diameter of the through hole 126a may be larger than the maximum width W7 of the fixing portion 207. The diameter of the fixing hole 137 may be smaller than the maximum width W7 of the fixing portion 207, and larger than the diameter of the fixing portion 207 formed by the outer surfaces of the first parts 2071a, 2072a of the fixing portion 207. The third parts 2071c, 2072c of the fixing portion 207 may touch the boundary of the fixing hole 137, and the fixing portion 207 may be elastically deformed by being inserted into the fixing hole 137. The fixing portion 207 penetrating the fixing hole 137 may be restored. The bridge 200B on which the fixing portion 207 is formed may be positioned on the front surface of the reflective sheet 126. The first parts 2071a, 2072a of the fixing portion 207 may be positioned in the through hole 126a and the fixing hole 137, and the second parts 2071b, 2072b may be caught on the rear surface of the frame 130.

Accordingly, the lifting of the bridge 200B of the fixing member 200 from the front surface of the reflective sheet 126 may be minimized.

Meanwhile, the fixing member 200 may further include a fixing portion formed on the support part 206 and a fixing hole of the frame 130 to which the fixing portion is coupled. The shape of the fixing portion of the support part 206 may be the same as the shape of the fixing portion 207 of the bridge 200B, and the shape of the fixing hole of the frame 130 may be the same as the shape of the fixing hole 137 of the frame 130. In this case, the lifting of the bridge 200B of the fixing member 200 and the support part 206 from the front surface of the reflective sheet 126 may be minimized.

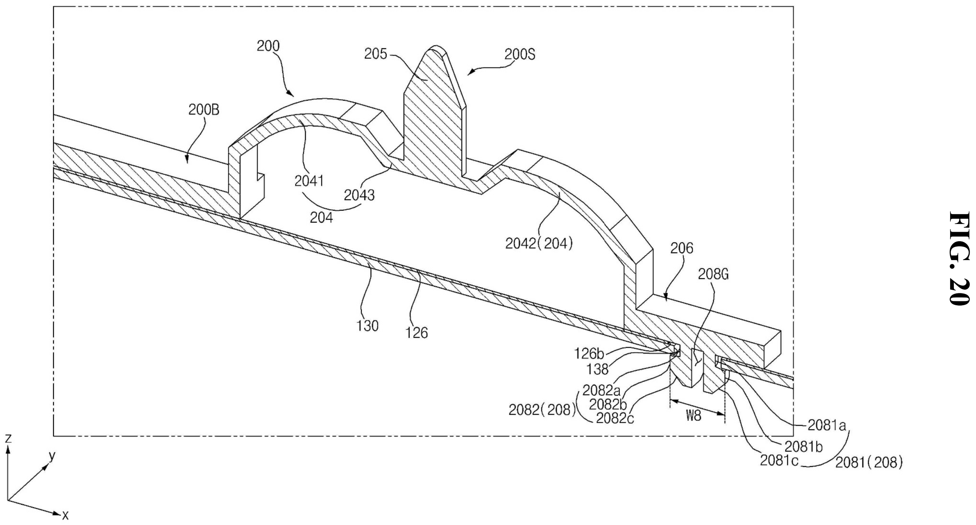

Referring to FIG. 20, the fixing member 200 may further include a fixing portion 208. The fixing portion 208 may be referred to as an auxiliary leg 208. The fixing portion 208 may protrude from the rear surface of the support part 206. The fixing portion 208 may be adjacent to the supporter 200S. A gap 208G may be formed in the fixing portion 208. A first fixing portion 2081 and a second fixing portion 2082 may protrude from the rear surface of the support part 206. The gap 208G may be formed between the first fixing portion 2081 and the second fixing portion 2082. The first fixing portion 2081 and the second fixing portion 2082 may be spaced apart from each other in the length direction of the fixing member 200. The fixing portion 208 may have elasticity. When the first fixing portion 2081 and the second fixing portion 2082 are compressed by an external force, the gap 208G may be reduced. When the external force is released, the first fixing portion 2081 and the second fixing portion 2082 may return to their original states, and the gap 208G may also return to its original state.

The first fixing portion 2081 may include a first part 2081a, a second part 2081b, and a third part 2081c. The first part 2081a may have a half cylinder shape. The second part 2081b may have a half cylinder shape, and the radius of the second part 2081b may be larger than the radius of the first part 2081a. The third part 2081c may have a half truncated cone shape. The radius of the third part 2081c may decrease as it gets farther away from the second part 2081b.

The second fixing portion 2082 may include a first part 2082a, a second part 2082b, and a third part 2082c. The first part 2082a may have a half cylinder shape. The second part 2082b may have a half cylinder shape, and the radius of the second part 2082b may be larger than the radius of the first part 2082a. The third part 2082c may have a half truncated cone shape. The radius of the third part 2082c may become smaller as it gets farther away from the second part 2082b.

For example, the first fixing portion 2081 and the second fixing portion 2082 may have shapes that are symmetrical to each other. The shape of the fixing portion 208 may be the same as the shape of the leg 202 of the fixer 200F described above with reference to FIGS. 9 and 11.

The fixing hole 138 may be formed in the frame 130, and may be positioned to correspond to the fixing portion 208. The fixing portion 208 may penetrate the through hole 126b of the reflective sheet 126 and the fixing hole 138. The outer surfaces of the second parts 2081b, 2082b of the fixing portion 208 may form the maximum width W8 of the fixing portion 208. The diameter of the through hole 126b may be larger than the maximum width W8 of the fixing portion 208. The diameter of the fixing hole 138 may be smaller than the maximum width W8 of the fixing portion 208, and may be larger than the diameter of the fixing portion 208 formed by the outer surfaces of the first parts 2081a, 2082b of the fixing portion 208. The third parts 2081c, 2082c of the fixing portion 208 may reach the boundary of the fixing hole 138, and the fixing portion 208 may be elastically deformed as the fixing portion 208 is inserted into the fixing hole 138. The fixing portion 208 penetrating the fixing hole 138 may be restored. The support part 206 on which the fixing portion 208 is formed may be positioned on the front surface of the reflective sheet 126. The first parts 2081a, 2082a of the fixing portion 208 may be positioned in the through hole 126b and the fixing hole 138, and the second parts 2081b, 2082b may be caught on the rear surface of the frame 130.

Accordingly, the lifting of the support part 206 of the fixing member 200 from the front surface of the reflective sheet 126 may be minimized.

Meanwhile, the fixing member 200 may further include a fixing portion formed in the bridge 200B and a fixing hole of the frame 130 to which the fixing portion is coupled. The shape of the fixing portion of the bridge 200B may be the same as the shape of the fixing portion 208 of the support part 206, and the shape of the fixing hole of the frame 130 may be the same as the shape of the fixing hole 138 of the frame 130. In this case, the lifting of the support part 206 of the fixing member 200 and the bridge 200B from the front surface of the reflective sheet 126 may be minimized.

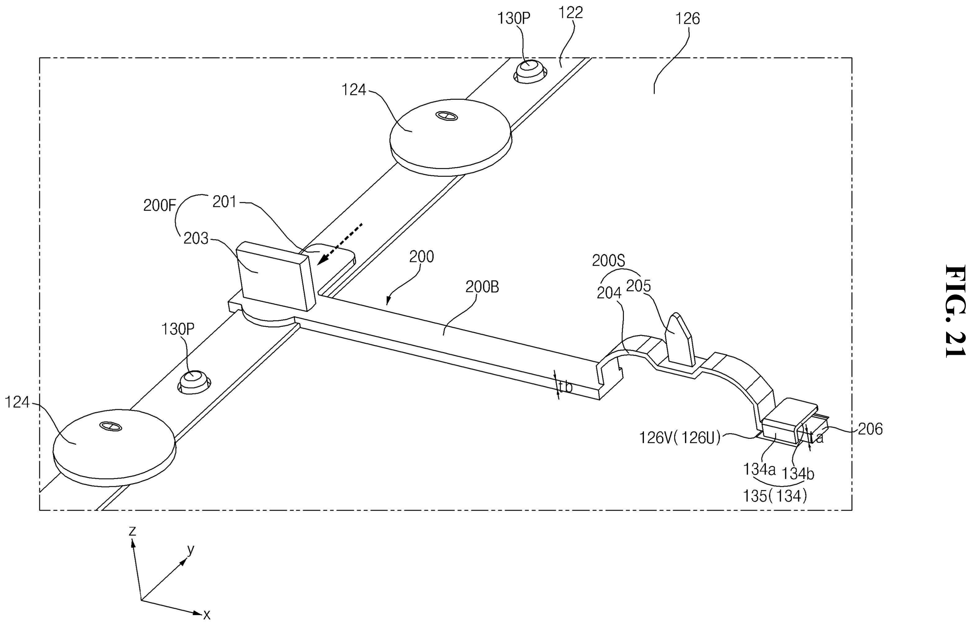

Referring to FIGS. 21 to 23, a holder 134 may be formed on the frame 130. The holder 134 may protrude from the front surface of the frame 130. The holder 134 may penetrate the hole 126U of the reflective sheet 126 positioned to correspond to the holder 134. The holder 134 may include a first part 134a and a second part 134b.

The first part 134a may protrude in a forward direction from the frame 130, and may penetrate the hole 126U of the reflective sheet 126. The height Ha of the first part 134a protruding from the front surface of the frame 130 may be equal to or greater than the thickness ta of the support part 206 or the thickness tb of the bridge 200B. The width Wa of the first part 134a may be smaller than the length of the support part 206 or the length of the bridge 200B.

The second part 134b may be bent from the front end of the first part 134a, and may face the front surface of the support part 206 or the front surface of the bridge 200B. The second part 134b may cover the support part 206 or the bridge 200B. Meanwhile, the first part 134a and the second part 134b may be formed by cutting and bending a part of the frame 130, and correspondingly, a hole 133H may be formed in the frame 130. In the forward/rearward direction, the second part 134b may overlap with the hole 133H.

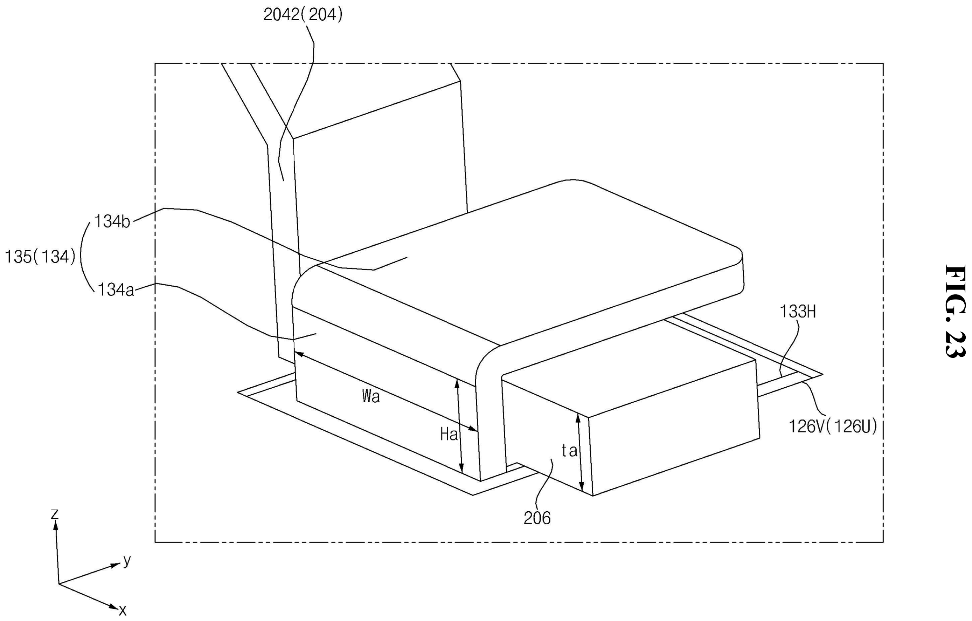

Referring to FIGS. 21 and 23, a first holder 135 may penetrate a hole 126V of the reflective sheet 126, and may be positioned to correspond to the support part 206 of the fixing member 200. In response to the sliding movement (see the dotted arrow) of the fixing member 200, the support part 206 may be inserted into a space between the second part 134b of the first holder 135 and the reflective sheet 126. In the forward/rearward direction, the distance between the rear surface of the second part 134b and the front surface of the reflective sheet 126 may be equal to or greater than the thickness ta of the support part 206. The lateral side of the support part 206 may be adjacent to the first part 134a. Accordingly, the first holder 135 may minimize the lifting of the support part 206 from the front surface of the reflective sheet 126.

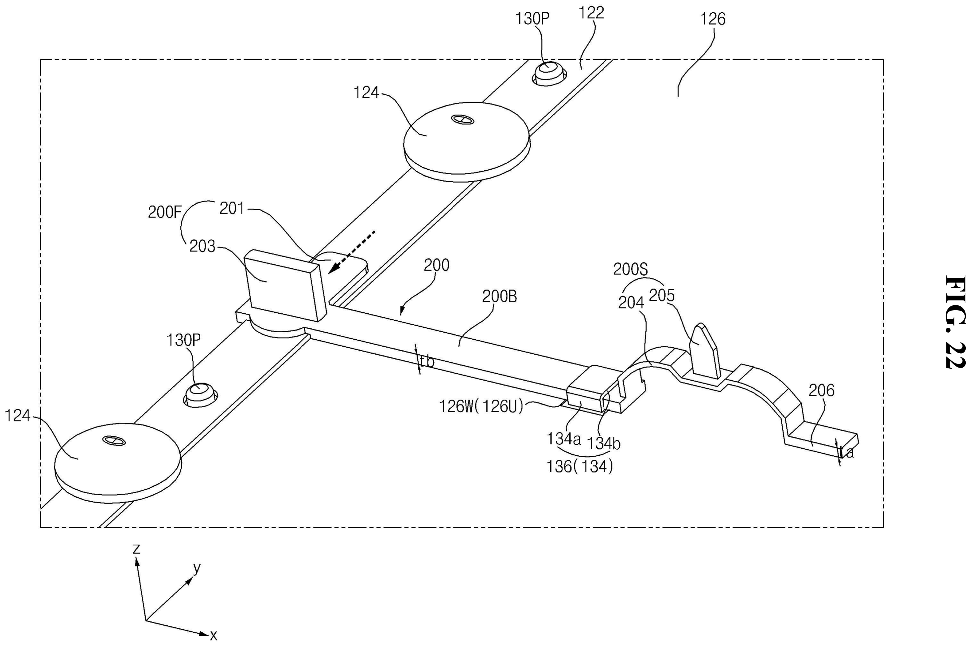

Referring to FIG. 22, the second holder 136 may penetrate the hole 126W of the reflective sheet 126, and may be positioned to correspond to the bridge 200B of the fixing member 200. In response to the sliding movement (see the dotted arrow) of the fixing member 200, the bridge 200B may be inserted into a space between the second part 134b of the first holder 135 and the reflective sheet 126. In the forward/rearward direction, the distance between the rear surface of the second part 134b and the front surface of the reflective sheet 126 may be equal to or greater than the thickness tb of the bridge 200B. The lateral side of the bridge 200B may be adjacent to the first part 134a. Accordingly, the second holder 136 may minimize the lifting of the bridge 200B from the front surface of the reflective sheet 126.

Alternatively, the frame 130 may be provided with both the first holder 135 and the second holder 136, and the first holder 135 and the second holder 136 may restrict the forward movement of the fixing member 200. The holder 134 may be referred to as a hook portion 134.

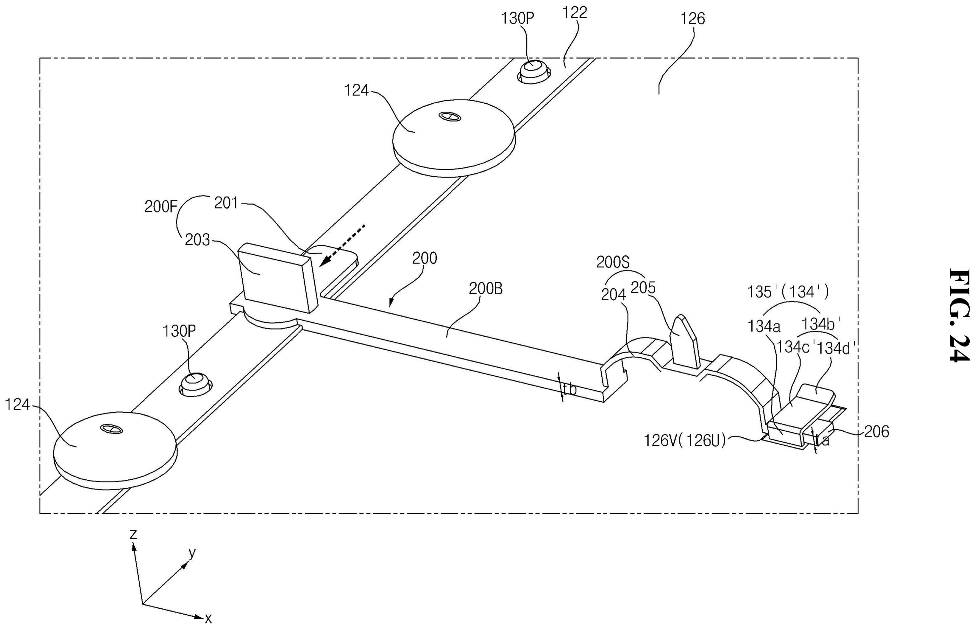

Referring to FIGS. 24 to 26, a holder 134' of the frame 130 may include a second part 134b' instead of the second part 134b of the holder 134 (see FIGS. 21 to 23).

The second part 134b' may be bent from the front end of the first part 134a, and may face the front surface of the support part 206 or the front surface of the bridge 200B. The second part 134b' may cover the support part 206 or the bridge 200B. Meanwhile, the first part 134a and the second part 134b' may be formed by cutting and bending a part of the frame 130, and correspondingly, a hole 133H may be formed in the frame 130. In the forward/rearward direction, the second part 134b' may overlap with the hole 133H.

The second part 134b' may be bent in a rearward direction. The second part 134b' may include a first section 134c' and a second section 134d'. The bent portion of the second part 134b' may be formed between the first section 134c' and the second section 134d'. The angle (theta a) between the first section 134c' and the second section 134d' may be an obtuse angle. The first section 134c' may be connected to the first part 134a. The first section 134c' may be positioned closer to the hole 133H as it gets farther away from the first part 134a. That is, the distance Dc' between the rear surface of the first section 134c' and the front surface of the reflective sheet 126 may gradually decrease as it gets farther away from the first part 134a. The second section 134d' may be connected to the first section 134c. The second section 134d' may be positioned farther away from the hole 133H as it gets farther away from the first section 134c'. That is, the distance Dd' between the back surface of the second section 134d' and the front surface of the reflective sheet 126 may gradually increase as it gets farther away from the first section 134c'.

The maximum value of the distance Dc' formed by the first section 134c' may be equal to or greater than the thickness ta of the support part 206 or the thickness tb of the bridge 200B. The minimum value of the distance Dc' formed by the first section 134c' may be smaller than the thickness ta of the support part 206 or the thickness tb of the bridge 200B. The minimum value of the distance Dc' may be defined at the boundary between the first section 134c' and the second section 134d'.

The minimum value of the distance Dd' formed by the second section 134d' may be smaller than the thickness ta of the support part 206 or the thickness tb of the bridge 200B. The minimum value of the distance Dd' may be equal to the minimum value of the distance Dc'. The maximum value of the distance Dd' formed by the second section 134d' may be equal to or larger than the thickness ta of the support part 206 or the thickness tb of the bridge 200B.

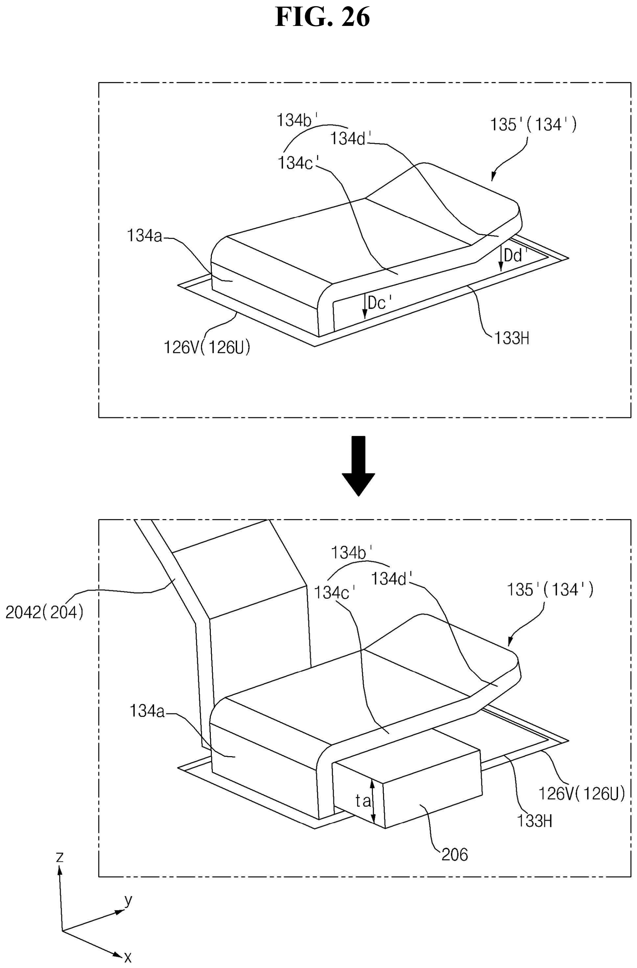

Referring to FIGS. 24 and 26, the first holder 135' may penetrate the hole 126V of the reflective sheet 126, and be positioned to correspond to the support part 206 of the fixing member 200. In response to the sliding movement (see the dotted arrow) of the fixing member 200, the support part 206 may be inserted into a space between the second part 134b' of the first holder 135' and the reflective sheet 126. In response to the insertion of the support part 206, the second part 134b' may be lifted forward by the support part 206. In other words, the second part 134b' may press the support part 206 toward the reflective sheet 126. Accordingly, the first holder 135' may minimize the lifting of the support part 206 from the front surface of the reflective sheet 126.

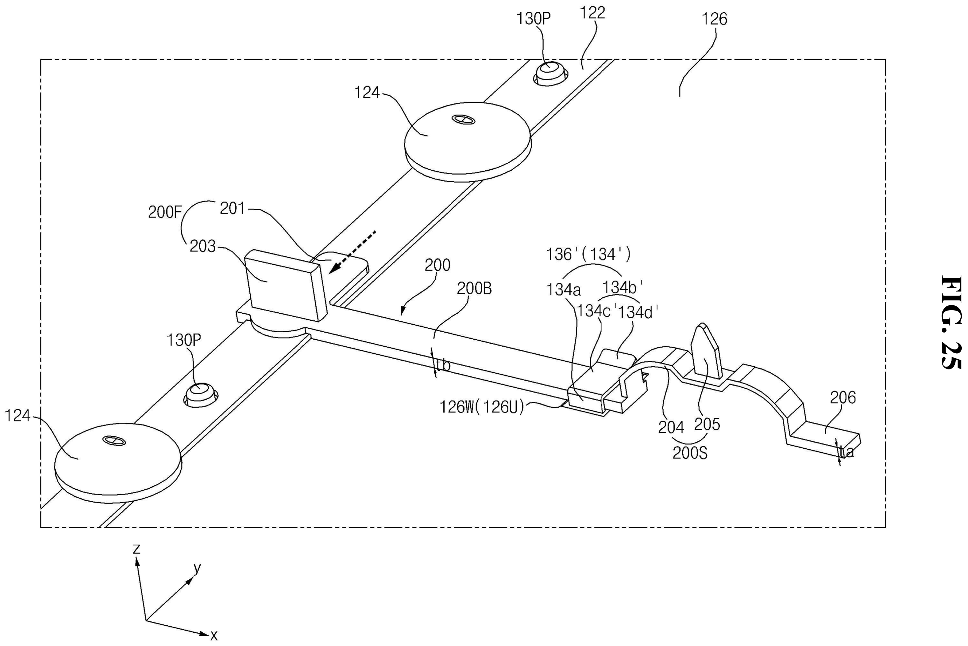

Referring to FIG. 25, the second holder 136' may penetrate the hole 126W of the reflective sheet 126, and may be positioned to correspond to the bridge 200B of the fixing member 200. In response to the sliding movement (see the dotted arrow) of the fixing member 200, the bridge 200B may be inserted into a space between the second part 134b' of the second holder 136' and the reflective sheet 126. In response to the insertion of the bridge 200B, the second part 134b' may be lifted forward by the bridge 200B. In other words, the second part 134b' may press the bridge 200B toward the reflective sheet 126. Accordingly, the second holder 136' may minimize the lifting of the bridge 200B from the front surface of the reflective sheet 126.

Alternatively, the frame 130 may have both the first holder 135' and the second holder 136', and the first holder 135' and the second holder 136' may restrict the forward movement of the fixing member 200. The holder 134' may be referred to as a hook portion 134'.

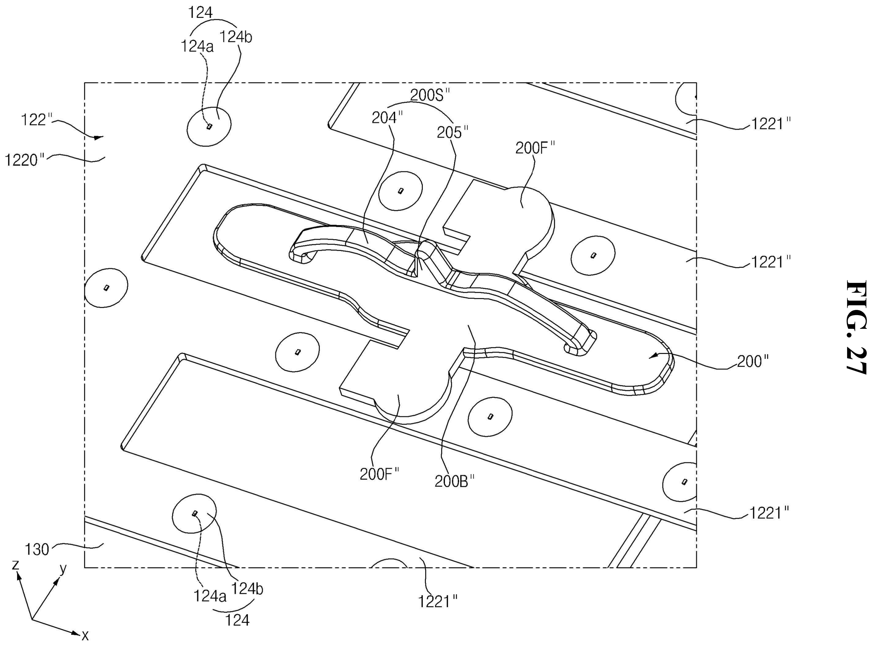

Referring to FIG. 27, the substrate 122" may have a fork shape as a whole. The substrate 122" may include a base 1220" and bars 1221". The base 1220" may be elongated. The base 1220" may extend in a vertical direction or in a horizontal direction. The bars 1221" may be connected to one side of the base 1220", and may extend in a direction intersecting with the base 1220". The bars 1221" may be spaced apart from each other along the one side of the base 1220". The optical assemblies 124 may be mounted on the front surface of the bars 1221". Some of the optical assemblies 124 may also be mounted on the front surface of the base 1220". The optical assemblies 124 on the substrate 122" may be arranged in a matrix form.

A fixing member 200" may be disposed between bars 1221". The fixing member 200" may include a fixer 200F", a bridge 200B", and a supporter 200S".

The fixer 200F" may have the same structure as the fixer 200F described above with reference to FIGS. 9 and 11. That is, the fixer 200F" on the bar 1221" may be coupled to the frame 130 while sliding in the length direction of the bar 1221". The fixer 200F" may be disposed between the optical assemblies 124. The fixing member 200" may have two fixers 200F", and each of two fixers 200F" may couple each of two bars 1221" to the frame 130. Alternatively, the fixing member 200" may have one fixer 200F", and one fixer 200F" may couple one bar 1221" to the frame 130.

A bridge 200B" may extend from the fixer 200F" into between the bars 1221". The bridge 200B" may connect two fixers 200F". Alternatively, a cantilever shaped bridge 200B" may be extended from one fixer 200F".

The supporter 200S" may have the same structure as the supporter 200S described above with reference to FIG. 11. That is, the supporter 200S" may include a curved part 204" that is bent at least once, and a protruding part 205" that protrudes forward from the curved part 204". Both ends of the supporter 200S" may be formed on the bridge 200B".

Accordingly, the fixing member 200" may fix the substrate 122" to the frame 130, and support the rear surface of the diffusion plate 129 (see FIG. 3). In particular, the supporter 200S" having two fixers 200F" may not rotate around the forward/rearward direction axis (i.e., the z-axis).

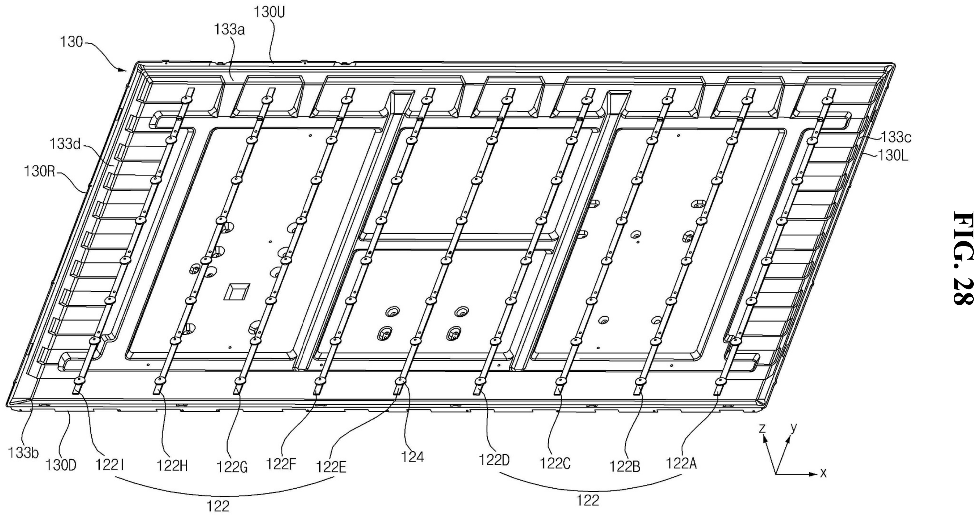

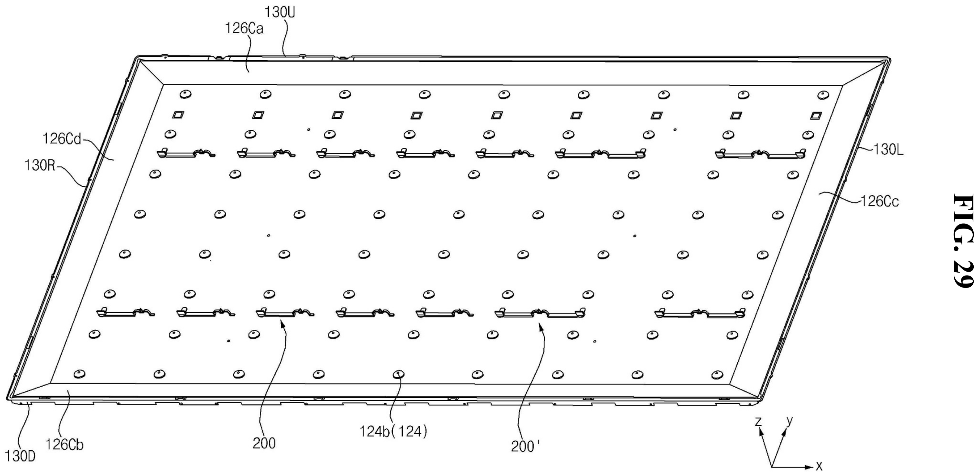

Referring to FIGS. 28 and 29, the substrate 122 having the optical assembly 124 mounted thereon may be positioned on the front surface of the frame 130. The reflective sheet 126 may cover the substrate 122. The optical assembly 124 may be positioned in a hole of the reflective sheet 126. Alternatively, the reflective sheet 126 may first cover the substrate 122, and then the optical assembly 124 may be mounted on the substrate 122 by penetrating the reflective sheet 126. The fixing member 200 may be positioned on the reflective sheet 126. The fixer 200F of the fixing member 200 may penetrate the reflective sheet 126, and may couple the substrate 122 to the frame 130. The supporter 200S of the fixing member 200 may be positioned between the reflective sheet 126 and the diffusion plate 129 (see FIG. 3), and may support the rear surface of the diffusion plate 129.

That is, the reflective sheet 126 of the present disclosure may cover the substrate 122 (see FIGS. 28 and 29), or be disposed between the frame 130 and the substrate 122 (see FIGS. 5 and 6).

Referring to FIGS. 1 to 29, a display device 100 may include: a display panel 110; a frame 130 which is positioned behind the display panel 110; a substrate 122 which is positioned between the display panel 110 and the frame 130; a light source 124a which is mounted on a front surface of the substrate 122; and a fixer 200F which couples the substrate 122 to the frame 130, in which the fixer 200F may include a leg 202 that penetrates the substrate 122 and the frame 130, and is engaged with a rear surface of the frame 130.

The light source 124a may be one of a plurality of light sources 124a spaced apart from each other, and the fixer 200F may be disposed between the plurality of light sources 124a.

The leg 202 may include legs 2021, 2022 spaced apart from each other with a gap 202G interposed there-between, and the legs 2021, 2022 may have elasticity and are caught on to the rear surface of the frame 130.

The frame 130 may include a coupling hole 132 through which the legs 2021, 2022 penetrate, and a maximum width of the legs 2021, 2022 may be defined at a rear of the frame 130, and may be larger than a width of the coupling hole 132.

The frame 130 may include a coupling hole 132 through which the legs 2021, 2022 penetrate, and the legs 2021, 2022 may include: first parts 2021a, 2022a which penetrate the coupling hole 132, and form a first width; and second parts 2021b, 2022b which protrude from the first parts 2021a, 2022a, and form a second width larger than the first width, in which the second parts 2021b, 2022b may be caught on the rear surface of the frame 130.

The coupling hole 132 may include: a first hole 1321 having a width corresponding to the second width; a second hole 1322 having a width corresponding to the first width; and a third hole 1323 which connects the first hole 1321 and the second hole 1322, and has a width smaller than the first width, in which the second parts 2021b, 2022b may be located behind the second hole 1322, and caught on the rear surface of the frame 130.

The fixer 200F may further include a body 201 on which the leg 202 is formed, and which is positioned on the front surface of the substrate 122.

The body 201 may cover a hole 122S of the substrate 122 through which the leg 202 penetrates and a hole 132 of the frame 130 through which the leg 202 penetrates, and may be opaque.

The fixer 200F may further include a handle 203 that protrudes from a front surface of the body 201 and is opposite to the leg 202.

The display device 100 may further include: a diffusion plate 129 which is positioned between the display panel 110 and the light source 124a; a supporter 200S which is spaced apart from the fixer 200F, and adjacent to a rear surface of the diffusion plate 129; and a bridge 200B which connects the fixer 200F and the supporter 200S, in which the bridge 200B may extend in a direction intersecting with a length direction of the substrate 122.

The supporter 200S may include: a curved part 204 which has elasticity, and is bent at least once; and a protruding part 205 which protrudes from the curved part 204 toward the rear surface of the diffusion plate 129.

The fixer 200F may further include a body 201 on which the leg 202 is formed and which is positioned on the front surface of the substrate 122, the body 201 having a thickness smaller than a thickness of the bridge 200B, in which a stepped portion between the body 201 and the bridge 200B may be adjacent to a lateral side of the substrate 122.

The fixer 200F may include: a body 201 in which the leg 202 is formed, and which is positioned on the front surface of the substrate 122; and an engaging portion 200E which is formed on the body 201, and opposite to the bridge 200B, in which the engaging portion 200E may have a thickness larger than a thickness of the body 201, and may be adjacent to a lateral side of the substrate 122.

One section of the bridge 200B may be broken, and the supporter 200S may connect the broken one section of the bridge 200B, and the display device 100 may further include a fixing portion 207; 208 that protrudes from a rear surface of the bridge 200B, penetrates the frame 130, and is caught on a rear surface of the frame 130.

One section of the bridge 200B may be broken, and the supporter 200S may connect the broken one section of the bridge 200B, and the display device 100 may further include a holder 134; 134' that protrudes from a front surface of the frame 130 and holds the bridge 200B.

A display device 100 may include: a display panel 110; a frame 130 which is positioned behind the display panel 110; a first substrate 122 which is positioned between the display panel 110 and the frame 130, and has a first light source 124a mounted thereon; a second substrate 122 which is spaced from the first substrate 122, and has a second light source 124a mounted thereon; and a fixer 200F which couples the first substrate 122 to the frame 130, in which the fixer 200F may include a leg 202 that penetrates the first substrate 122 and the frame 130, and is engaged with a rear surface of the frame 130.

The display device 100 may further include a fixing member 200' having the fixer 200F, and the fixer 200F may include: a first fixer 200F which couples the first substrate 122 to the frame 130; and a second fixer 200F' which couples the second substrate 122 to the frame 130, in which the fixing member 200' may include a bridge 200B, 200B' that connects the first fixer 200F and the second fixer 200F'.

The display device 100 may further include a diffusion plate 129 which is positioned between the display panel 110 and the first and second light sources 124a; a supporter 200S which is positioned between the first substrate 122 and the second substrate 122; and a bridge 200B which connects the fixer 200F and the supporter 200S, in which the bridge 200B may extend in a direction intersecting with the first substrate 122 and the second substrate 122.

A display device 100 may include: a display panel 110; a frame 130 which is positioned behind the display panel 110; a substrate 122 which is positioned between the display panel 110 and the frame 130; a light source 124a which is mounted on a front surface of the substrate 122; a reflective sheet 126 which reflects light from the light source 124a, the reflective sheet 126 being disposed between the frame 130 and the substrate 122 or covering the front surface of the substrate 122; and a fixer 200F which couples the substrate 122 to the frame 130, in which the fixer 200F may include a leg 202 that penetrates the substrate 122 and the frame 130, and is engaged with a rear surface of the frame 130.

The substrate 122 may be positioned on the reflective sheet 126, and the reflective sheet 126 may include a slit 126S that is covered by the substrate 122 and may have a width smaller than a width of the substrate 122, in which the leg 202 may penetrate a portion 130C of the frame 130 that is positioned to correspond to the slit 126S.

The display device according to the present disclosure has the following effects.

According to at least one of the embodiments of the present disclosure, it is possible to provide the fixer that couples the substrate to the frame.

According to at least one of the embodiments of the present disclosure, it is possible to provide the member including the fixer and the supporter of the diffusion plate.

According to at least one of the embodiments of the present disclosure, it is possible to provide the structure that may minimize lifting of the bridge connecting the fixer and the supporter.

According to at least one of the embodiments of the present disclosure, it is possible to provide various examples of the member includingthe fixer, the bridge, and the supporter.

Certain embodiments or other embodiments of the invention described above are not mutually exclusive or distinct from each other. Any or all elements of the embodiments of the invention described above may be combined or combined with each other in configuration or function.

For example, a configuration "A" described in one embodiment of the invention and the drawings and a configuration "B" described in another embodiment of the invention and the drawings may be combined with each other. Namely, although the combination between the configurations is not directly described, the combination is possible except in the case where it is described that the combination is impossible.

The foregoing embodiments are merely examples and are not to be considered as limiting the present disclosure. The scope of the present disclosure should be determined by rational interpretation of the appended claims, and all modifications within the equivalents of the disclosure are intended to be included within the scope of the present disclosure.

## Claims

1. A display device (100) comprising:
a display panel (110);
a frame (130) positioned behind the display panel (110);
a substrate (122) disposed between the display panel (110) and the frame (130);
a light source (124a) mounted on a front surface of the substrate (122); and,
a fixer (200F) coupling the substrate (122) to the frame (130),
wherein the fixer (200F) comprises a leg (202) penetrating the substrate (122) and the frame (130), and coupled to a rear surface of the frame (130).

2. The display device (100) of claim 1, wherein the light source (124a) is one of a plurality of light sources (124a) spaced apart from each other,wherein the fixer (200F) is disposed between the plurality of light sources (124a).

3. The display device (100) of claim 1 or 2, wherein the leg (202) comprises legs (2021, 2022) spaced apart from each other by a gap (202G),
wherein the legs (2021, 2022) have elasticity and are coupled to the rear surface of the frame (130).

4. The display device (100) of claim 3, wherein the frame (130) comprises a coupling hole (132) through which the legs (2021, 2022) pass,wherein a maximum width of the legs (2021, 2022) is defined at a rear of the frame (130), and is larger than a width of the coupling hole (132).

5. The display device (100) of claim 3 or 4, wherein the frame (130) comprises a coupling hole (132) through which the legs (2021, 2022) pass, wherein the legs (2021, 2022) comprise:
first parts (2021a, 2022a) penetrating the coupling hole (132), and forming a first width; and
second parts (2021b, 2022b) protruding from the first parts (2021a, 2022a), and forming a second width larger than the first width,
wherein the second parts (2021b, 2022b) are coupled to the rear surface of the frame (130).

6. The display device (100) of claim 5, wherein the coupling hole (132) comprises:
a first hole (1321) having a width corresponding to the second width;
a second hole (1322) having a width corresponding to the first width; and
a third hole (1323) connecting the first hole (1321) and the second hole (1322), and having a width smaller than the first width,
wherein the second parts (2021b, 2022b) are positioned behind the second hole (1322), and are coupled to the rear surface of the frame (130).

7. The display device (100) of any one of claims 1 to 6, wherein the fixer (200F) further comprises a body (201) at which the leg (202) is formed, and which is positioned on the front surface of the substrate (122).

8. The display device (100) of claim 7, wherein the body (201) covers a hole (122S) of the substrate (122) through which the leg (202) passes and a hole (132) of the frame (130) through which the leg (202) passes, and is opaque.

9. The display device (100) of claim 7 or 8, wherein the fixer (200F) further comprises a handle (203) protruding from a front surface of the body (201), and opposite to the leg (202).

10. The display device (100) of any one of claims 1 to 9, further comprising:
a diffusion plate (129) disposed between the display panel (110) and the light source (124a);
a supporter (200S) spaced apart from the fixer (200F), and adjacent to a rear surface of the diffusion plate (129); and
a bridge (200B) connecting the fixer (200F) and the supporter (200S),
wherein the bridge (200B) extends in a direction intersecting with a length direction of the substrate (122).

11. The display device (100) of claim 10, wherein the supporter (200S) comprises:
a curved part (204) having elasticity, and bent at least once; and
a protruding part (205) protruding from the curved part (204) toward the rear surface of the diffusion plate (129).

12. The display device (100) of claim 10 or 11, wherein the fixer (200F) further comprises a body (201) at which the leg (202) is formed, and positioned on the front surface of the substrate (122), the body (201) having a thickness (t1) smaller than a thickness (t3) of the bridge,
wherein a stepped portion (200T) between the body (201) and the bridge (200B) is adjacent to a lateral side (122L1) of the substrate (122).

13. The display device (100) of claim 10 or 11, wherein the fixer (200F) comprises:
a body (201) at which the leg (202) is formed, and which is positioned on the front surface of the substrate (122); and
an engaging portion (200E) formed at the body (201), and opposite to the bridge (200B),
wherein the engaging portion (200E) has a thickness (t4) larger than a thickness (t1) of the body (201), and is adjacent to a lateral side of the substrate (122).

14. The display device (100) of any one of claims 10 to 13, wherein one section of the bridge (200B) is broken,
wherein the supporter (200S) connects the broken one section of the bridge (200B),
wherein the display device further comprises a fixing portion (207, 208) protruding from a rear surface of the bridge (200B), penetrating the frame (130), and coupled to a rear surface of the frame (130).

15. The display device (100) of any one of claims 10 to 13, wherein one section of the bridge (200B) is broken,
wherein the supporter (200S) connects the broken one section of the bridge (200B),
wherein the display device further comprises a holder (134, 134') protruding from a front surface of the frame (130), and holding the bridge (200B).
